# EUROPEAN PATENT APPLICATION

(11) **EP 4 765 436 A1**
(43) Date of publication of application: **24.06.2026**
(21) Application number: 24914571.5
(22) Date of filing: 03.01.2024
(51) Int. Cl.: H01M 50/503

(54) **BATTERY AND ELECTRICAL DEVICE**

(71) Applicant: Contemporary Amperex Technology Co., Limited, Ningde, Fujian 352100 (CN)
(72) Inventor: YUAN, Shenggang, Ningde, Fujian 352100 (CN); WANG, Zengzhong, Ningde, Fujian 352100 (CN); WANG, Peng, Ningde, Fujian 352100 (CN); JIA, Jun, Ningde, Fujian 352100 (CN); NIU, Jianxin, Ningde, Fujian 352100 (CN)
(74) Representative: Lorenz Seidler Gossel Part. mbB
(86) International application number: PCT/CN2024/070399
(87) International publication number: WO 2025/145338

(57) **Abstract**

A battery and an electrical device. The battery comprises a case (10), a connector (30) and at least one battery cell (20), wherein the at least one battery cell (20) is located in the case (10); and the connector (30) comprises a first connecting portion (31) and a second connecting portion (32) connected to each other, the first connecting portion (31) being fixedly connected to the at least one battery cell (20), and the second connecting portion (32) being fixedly connected to the case (10), so that the connector (30) can stably connect the battery cell (20) and the case (10) together, the connection reliability of the battery cell (20) and the case (10) is improved, and the structural strength and rigidity of the battery are improved, thereby improving the use reliability of the battery, and prolonging the service life of the battery.

## Description

### TECHNICAL FIELD

The present application pertains to the technical field of batteries, and in particular, to a battery and an electric device.

### BACKGROUND

Energy conservation and emission reduction are crucial to the sustainable development of the automobile industry. In this context, electric vehicles have become a core part of the sustainable development of the automobile industry due to their energy-saving and environmentally friendly characteristics. However, for electric vehicles, the battery technology is a key factor affecting their development.

With the advancement of battery technology, various performances of batteries are continuously optimized, particularly the structural strength of the batteries, which is a critical aspect of battery performance. If the structural strength of a battery cannot be ensured, the use of the battery involves significant risks. Therefore, how to improve the structural strength of batteries remains an issue to be addressed.

The above statements are only used to provide background information related to the present application and do not necessarily constitute the prior art.

### SUMMARY

An objective of embodiments of the present application is to provide a battery and an electric device, so as to improve the structural strength of batteries.

The technical solutions used in the embodiments of the present application are as follows:
In a first aspect, a battery is provided. The battery includes a case, a connecting member, and at least one battery cell, and the at least one battery cell is disposed within the case; the connecting member includes a first connecting portion and a second connecting portion connected to each other, the first connecting portion is fixedly connected to the at least one battery cell, and the second connecting portion is fixedly connected to the case.

The battery according to the embodiments of the present application includes a case, a connecting member, and at least one battery cell, and the battery cell is disposed within the case; the connecting member includes a first connecting portion and a second connecting portion connected to each other, the first connecting portion is fixedly connected to the battery cell, and the second connecting portion is fixedly connected to the case, such that the connecting member can stably connect the battery cell and the case together, and the connection reliability between the battery cell and the case is improved, thereby improving the structural strength and rigidity of the battery, and improving the use reliability and prolonging the service life of the battery.

In some embodiments, the case includes a first case and a second case, the first case is provided with an accommodating cavity having an opening, the battery cell is disposed within the accommodating cavity, and the second case lids the opening of the accommodating cavity; at least one of the first case and the second case is fixedly connected to the second connecting portion.

By adopting the technical solution of the embodiments, the second case can close the opening of the accommodating cavity, which can improve the protection effect of the case on the battery cell, thereby improving the use reliability of the battery. In addition, the connection position between the second connecting portion and the case is flexible and diversified, and thus the manufacturing process is simple and convenient.

In some embodiments, when the first case is fixedly connected to the second connecting portion, the first case includes a plurality of side wall portions configured to be connected to the second case, and the plurality of side wall portions are connected and define, in an enclosing manner, the accommodating cavity. At least one of the side wall portions is fixedly connected to the second connecting portion, and at least one of the side wall portions is fixedly connected to the second connecting portion.

By adopting the technical solution of the embodiments, the side wall portions of the second case exhibit good structural strength, and the second connecting portion is connected to the side wall portion, such that the connection strength between the second connecting portion and the case can be increased, thereby improving the structural strength and rigidity of the battery.

In some embodiments, the second connecting portion is bonded to the side wall portion.

By adopting the technical solution of the embodiments, the second connecting portion and the side wall portion are connected by bonding, and the connection operation is simple, which is conducive to improving the production efficiency of the battery.

In some embodiments, the battery further includes a fastener, the second connecting portion is provided with a first connecting hole, the side wall portion is provided with a second connecting hole, and the fastener passes through the first connecting hole and the second connecting hole to fixedly connect the second connecting portion and the side wall portion.

By adopting the technical solution of the embodiments, the second connecting portion and the side wall portion are fixedly connected by the fastener, and the connection reliability of the fastener is good, which is conducive to improving the structural strength and rigidity of the battery; the connection operation of the fastener is simple, such that the production efficiency of the battery can be improved.

In some embodiments, in a first direction, the fastener does not protrude out from an end surface of the side wall portion facing the second case, and the first direction is a direction from the first case toward the second case.

By adopting the technical solution of the embodiments, the fastener does not protrude out from the end surface of the side wall portion facing the second case, and the fastener is less likely to interfere with the second case, which is conducive to improving the structural strength and assembly efficiency of the battery.

In some embodiments, an accommodating recess is formed in an end portion of the side wall portion facing the second case, and the second connecting portion is fixed within the accommodating recess.

By adopting the technical solution of the embodiments, the second connecting portion is accommodated within the accommodating recess, and thus the risk of interference between the second connecting portion and the second case can be reduced, which is conducive to improving the structural strength and assembly efficiency of the battery.

In some embodiments, in the first direction, the second connecting portion does not protrude out from the end surface of the side wall portion facing the second case, and the first direction is the direction from the first case toward the second case.

By adopting the technical solution of the embodiments, the second connecting portion is completely accommodated within the accommodating recess, such that the second connecting portion is less likely to interfere with the second case, which is conducive to improving the structural strength and assembly efficiency of the battery.

In some embodiments, two opposite sides of the first connecting portion are connected to the second connecting portions, and the two second connecting portions are fixedly connected to the two side wall portions disposed opposite to each other, respectively.

By adopting the technical solution of the embodiments, the two second connecting portions are respectively connected to the two side wall portions, such that the connection reliability between the connecting member and the case is good, and the structural strength and rigidity of the battery can be better improved.

In some embodiments, the connecting member is provided on one side of the battery cell facing the second case and/or one side of the battery cell facing away from the second case.

By adopting the technical solution of the embodiments, the position of the connecting member can be set flexibly to meet different use requirements.

In some embodiments, the side wall portion connected to the second connecting portion is provided with a mounting structure for mounting the battery.

By adopting the technical solution of the embodiments, the side wall portion provided with the mounting structure exhibits good structural strength, and the second connecting portion is connected to the side wall portion, such that the connection strength between the second connecting portion and the case can be increased, thereby improving the structural strength and rigidity of the battery.

In some embodiments, the battery cell has a first surface, and the first surface is provided with an electrode terminal; the first surface is connected to the first connecting portion; or the battery cell has a second surface adjacent to the first surface, and the second surface is connected to the first connecting portion.

By adopting the technical solution of the embodiments, the connection position between the first connecting portion and the battery cell can be flexibly set to meet the use requirements of different types of batteries.

In some embodiments, when the first surface is connected to the first connecting portion, the first surface is bonded to the first connecting portion; when the second surface is connected to the first connecting portion, the second surface is bonded to the first connecting portion.

By adopting the technical solution of the embodiments, the battery cell and the first connecting portion are bonded by an adhesive, so as to achieve fixed connection between the first connecting portion and the battery cell. The fixed connection manner is simple, and the production efficiency of the battery can be improved.

In some embodiments, a plurality of battery cells are provided, the plurality of battery cells are arranged in a matrix array in a second direction and a third direction, and the second direction is perpendicular to the third direction; the first connecting portion includes a first connecting sub-portion extending in the second direction and a second connecting sub-portion extending in the third direction, the first connecting sub-portion is fixedly connected to the plurality of battery cells arranged in the second direction, the second connecting sub-portion is fixedly connected to the plurality of battery cells arranged in the third direction, and at least one of the first connecting sub-portion and the second connecting sub-portion is connected to the second connecting portion.

By adopting the technical solution of the embodiments, the first connecting sub-portion can fixedly connect the plurality of battery cells arranged in the second direction, and the second connecting sub-portion can fixedly connect the plurality of battery cells arranged in the third direction, such that the plurality of battery cells are fixedly connected in the second direction and the third direction, the plurality of battery cells form a whole, and the overall rigidity of the grouped battery cells can be improved, thereby improving the overall rigidity of the battery, effectively improving the modal characteristics of the battery, allowing the battery to avoid the resonance frequency of the whole vehicle, and thus improving the mechanical strength and prolonging the service life of the battery. In addition, the plurality of battery cells are constrained by the first connecting sub-portion and the second connecting sub-portion, which can also improve the capability of the battery cells to resist expansion and deformation, and is conducive to improving the performance of the battery.

In some embodiments, the first connecting sub-portion is fixedly connected to two adjacent battery cells arranged in the third direction; and/or, the second connecting sub-portion is fixedly connected to two adjacent battery cells arranged in the second direction.

By adopting the technical solution of the embodiments, the first connecting sub-portion can fixedly connect two adjacent groups of the plurality of battery cells arranged in the second direction, which can improve the connection reliability of the two adjacent groups of the plurality of battery cells arranged in the second direction, thereby improving the structural strength and rigidity of the battery; one second connecting sub-portion can fix two adjacent groups of the plurality of battery cells arranged in the third direction, which can improve the connection reliability of the two adjacent groups of the plurality of battery cells arranged in the third direction, thereby improving the structural strength and rigidity of the battery; the structure of the connecting member can also be simplified, and the manufacturing cost of the connecting member is reduced, which is also conducive to improving the production efficiency of the battery; furthermore, the structure of the connecting member can also be simplified, and the manufacturing cost of the connecting member is reduced, which is also conducive to improving the production efficiency of the battery.

In some embodiments, the first connecting sub-portion and the second connecting sub-portion define, in an enclosing manner, an accommodating region; the first connecting portion further includes a third connecting sub-portion, the third connecting sub-portion connects the first connecting sub-portion and the second connecting sub-portion, and the third connecting sub-portion is disposed within the accommodating region.

By adopting the technical solution of the embodiments, the third connecting sub-portion can improve the connection reliability of the first connecting sub-portion and the second connecting sub-portion, thereby improving the structural strength of the connecting member, and further improving the structural strength and rigidity of the battery.

In some embodiments, the battery cell is provided with the electrode terminal, and the third connecting sub-portion is provided with a clearance hole for providing clearance for the electrode terminal; a first blocking portion is connected to the third connecting sub-portion, the first blocking portion protrudes from a surface of the third connecting sub-portion facing the battery cell, and the first blocking portion is arranged around a periphery of the clearance hole; and/or the battery cell is provided with a pressure relief mechanism, the third connecting sub-portion is provided with a discharge structure, and the discharge structure is disposed opposite to the pressure relief mechanism to release emissions discharged through the pressure relief mechanism; a second blocking portion is connected to the third connecting sub-portion, the second blocking portion protrudes from a surface of the third connecting sub-portion facing the battery cell, and the second blocking portion is arranged around a periphery of the discharge structure.

By adopting the technical solution of the embodiments, the arrangement of the first blocking portion can block the adhesive or solid particles from contacting the electrode terminal, which is conducive to improving the reliability of the electrical connection between the electrode terminal and the busbar component, thereby improving the use reliability of the battery; and the arrangement of the second blocking portion can block the adhesive or solid particles from contacting the pressure relief mechanism and the discharge structure, which is conducive to improving the smoothness of the discharge of the emissions, thereby improving the use reliability of the battery.

In some embodiments, a first gap is formed between two adjacent battery cells arranged in the third direction; the first connecting sub-portion is provided with a third blocking portion, the third blocking portion protrudes from a surface of the first connecting sub-portion facing the battery cell, and the third blocking portion is configured to block an adhesive or solid particles from entering the first gap; and/or, a second gap is formed between two adjacent battery cells arranged in the second direction; the second connecting sub-portion is provided with a fourth blocking portion, the fourth blocking portion protrudes from a surface of the second connecting sub-portion facing the battery cell, and the fourth blocking portion is configured to block an adhesive or solid particles from entering the second gap.

By adopting the technical solution of the embodiments, the arrangement of the third blocking portion and/or the fourth blocking portion can reduce the risk of the adhesive or solid particles entering the gap between two adjacent battery cells, and reduce the risk of damage to the battery cells, which is conducive to improving the use reliability and prolonging the service life of the battery.

In some embodiments, the connecting member is an insulating member, and the battery further includes a busbar component configured to be electrically connected to the electrode terminal of the battery cell; the first connecting portion of the insulating member is disposed between the busbar component and the battery cell.

By adopting the technical solution of the embodiments, the first connecting portion of the insulating member is disposed between the busbar component and the battery cell, such that the first connecting portion and the battery cell are insulated, the risk of short circuit of the battery cell is reduced, and the reliability of the battery is improved. In addition, the insulating member between the busbar component and the battery cell in the battery can also be directly used as a connecting member, and no additional connecting member is required, which is conducive to improving the structural compactness of the battery and reducing the manufacturing cost of the battery.

In some embodiments, the connecting member is a heat exchange member, and the heat exchange member is configured to exchange heat with the battery cell.

By adopting the technical solution of the embodiments, the heat exchange member can achieve temperature control of the battery cell, such that the battery can exhibit favorable charging and discharging performance. In addition, the heat exchange member in the battery can also be directly used as a connecting member, and no additional connecting member is required, which is conducive to improving the structural compactness of the battery and reducing the manufacturing cost of the battery.

In some embodiments, the battery further includes a busbar component configured to be electrically connected to the battery cell; the first connecting portion of the heat exchange member is disposed between the busbar component and the battery cell; at least one of a surface, facing the busbar component, of the first connecting portion of the heat exchange member and a surface, facing away from the busbar component, of the first connecting portion of the heat exchange member is covered with an insulating layer.

By adopting the technical solution of the embodiments, at least one of the surface of the first connecting portion facing the busbar component and the surface of the first connecting portion facing away from the busbar component of the heat exchange member is covered with an insulating layer, such that the insulation from the battery cell and/or the insulation from the busbar component can be achieved, and meanwhile, the heat exchange member can also achieve heat exchange of the battery cell and connection between the battery cell and the case. In this way, one heat exchange member can achieve three functions, which can reduce the number of components of the battery, improve the compactness of the structure, improve the performance of the battery, and reduce the manufacturing cost of the battery.

In some embodiments, the battery further includes a sampling assembly for sampling information of the battery cell, and the sampling assembly is connected to the connecting member.

By adopting the technical solution of the embodiments, the sampling assembly is connected to the connecting member, such that the sampling assembly is integrated with the connecting member, which can improve the integration level of the battery, and thus improve the performance of the battery.

In a second aspect, an electric device is provided. The electric device includes the battery according to the above embodiments.

The electric device according to the embodiments of the present application employs the above battery, and the battery exhibits good structural strength and rigidity, which is conducive to improving the performance of the electric device.

In some embodiments, the electric device is a vehicle, and a surface of the battery cell having the largest area is disposed to face a door of the vehicle.

By adopting the technical solution of the embodiments, the surface of the battery cell having the largest area is disposed to face the door of the vehicle, such that when a side pillar collision or side compression occurs in the vehicle, the deformation is borne by the surface having the largest area. Since the surface of the battery cell having the largest area allows a much greater amount of intrusion than other surfaces of the battery cell, the risk of short circuit after the battery cell is compressed and deformed is relatively low, which can greatly improve the safety of the battery under side pillar collision and side compression conditions.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic structural view of a vehicle according to some embodiments of the present application.
FIG. 2 is a schematic view of an exploded structure of a battery according to some embodiments of the present application.
FIG. 3 is a schematic structural view of the battery shown in FIG. 2 with the second case hidden.
FIG. 4 is a cross-sectional view along line A-A in FIG. 3.
FIG. 5 is a partially enlarged view of the portion B in FIG. 4.
FIG. 6 is a partially enlarged view of the position B shown in FIG. 4 of a battery according to some other embodiments of the present application.
FIG. 7 is a partially enlarged view of the position B shown in FIG. 4 of a battery according to yet some other embodiments of the present application.
FIG. 8 is a partially enlarged view of the position B shown in FIG. 4 of a battery according to yet some other embodiments of the present application.
FIG. 9 is a schematic structural view of a battery cell according to some embodiments of the present application.
FIG. 10 is a schematic structural view of a battery cell according to some other embodiments of the present application.
FIG. 11 is a schematic structural view of a battery with the second case hidden according to some other embodiments of the present application.
FIG. 12 is a schematic view of an exploded structure of the battery shown in FIG. 11 with the case hidden.
FIG. 13 is a schematic structural view of the connecting member shown in FIG. 12.
FIG. 14 is a schematic view of an exploded structure of a battery with the case hidden according to yet some other embodiments of the present application.
FIG. 15 is a schematic structural view of the connecting member shown in FIG. 14 from one perspective.
FIG. 16 is a schematic structural view of the connecting member shown in FIG. 14 from another perspective.
FIG. 17 is a partially enlarged view of the portion C in FIG. 16.

Reference numerals in the drawings have the following meanings:
1000, vehicle; 1100, battery; 1200, controller; 1300, motor; 10, case; 11, first case; 111, side wall portion; 1111, second connecting hole; 1112, accommodating recess; 1113, mounting structure; 112, bottom plate; 113, accommodating cavity; 12, second case; 20, battery cell; 21, first surface; 22, second surface; 23, electrode terminal; 24, pressure relief mechanism; 26, first side surface; 27, second side surface; 28, third side surface; 201, first gap; 202, second gap; 30, connecting member; 301, insulating member; 302, heat exchange member; 31, first connecting portion; 311, first connecting sub-portion; 3111, third blocking portion; 3112, first blocking sub-portion; 312, second connecting sub-portion; 3121, fourth blocking portion; 3122, second blocking sub-portion; 313, third connecting sub-portion; 3131, clearance hole; 3132, discharge structure; 31321, discharge hole; 3133, reinforcing rib; 3134, first blocking portion; 3135, second blocking portion; 314, accommodating region; 32, second connecting portion; 321, first connecting hole; 40, fastener; 41, rivet; 42, bolt; 51, busbar component; 52, sampling assembly; 53, adhesive.

### DETAILED DESCRIPTION

In order to make the technical problems to be addressed, the technical solutions, and the beneficial effects of the present application more apparent, the present application is further described in detail below with reference to the drawings and embodiments. It should be understood that the specific embodiments described herein are merely illustrative of the present application and do not limit the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. Therefore, a feature defined with "first" or "second" may explicitly or implicitly include one or more such features.

Reference in the present application to "embodiment" means that a particular feature, structure, or characteristic described in combination with the embodiment may be included in at least some embodiments of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments in any suitable manner.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces. The meaning of "several" is one or more, unless otherwise specifically defined.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, when an element is referred to as being "fixed to" or "disposed on" another element, it may be directly on or indirectly on the other element. When an element is referred to as being "connected to" another element, it may be directly connected to the other element or indirectly connected to the other element.

In the present application, battery cells may include lithium-ion secondary batteries, lithium-ion primary batteries, lithium-sulfur batteries, sodium-lithium-ion batteries, sodium-ion batteries, lithium metal batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case used to encapsulate one or a plurality of battery cells. The case can prevent liquid or other foreign matter from affecting the charging or discharging of the battery cells.

A battery cell includes an electrode assembly and an electrolytic solution. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab.

Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, lithium metal, lithium alloy, or the like. To ensure the passing of a large current without fusing, there are a plurality of positive electrode tabs that are stacked together, and there are a plurality of negative electrode tabs that are stacked together. The material of the separator may be polypropylene (PP), polyethylene (PE), or the like. In addition, the electrode assembly in the embodiments of the present application includes, but is not limited to, a winding structure or a stacked structure.

The battery cell in the embodiments of the present application further includes a housing, and the electrode assembly is mounted within the housing, thus protecting the electrode assembly through the housing.

The housing refers to a housing structure having a space therein to accommodate and protect the electrode assembly. The housing may be made of a material with a certain hardness and strength, such that the housing is not easily deformed when being pressed or collided, thereby enabling the battery cell to have higher structural strength and improved reliability. The housing body may be made of various materials, including but not limited to copper, iron, aluminum, stainless steel, aluminum alloy, plastic, or the like.

The housing of the battery cell is provided with an electrode terminal. The electrode terminal refers to a conductive member arranged on the housing, and the electrode terminal is connected to the tabs of the electrode assembly to output electrical energy of the battery cell or charge the battery cell. The battery cell generally has two electrode terminals, and the two electrode terminals are respectively connected to positive and negative electrode tabs of the electrode assembly. The electrode terminal connected to the positive electrode tab is the positive electrode terminal, and the electrode terminal connected to the negative electrode tab is the negative electrode terminal. The electrode assembly is connected to the electrode terminal to form a battery cell.

When a battery cell is charged, current passing through the electrolyte drives chemical reactions between the electrolyte and the electrodes, thereby converting electrical energy into chemical energy, and the chemical energy is stored in the battery cell. During the discharging process, chemical energy is converted into electrical energy for release. This energy conversion process is accompanied by energy loss and heat generation. If the internal heat dissipation of the battery cell is poor and the heat cannot be effectively dissipated, overheating of the battery cell may occur. There is a certain internal resistance inside the battery cell, and a resistance loss will be generated when the current passes through the internal resistance, resulting in heat generation inside the battery cell. When the current is excessively large or the internal resistance is excessively high, the heat generation inside the battery cell is intensified, resulting in overheating of the battery cell. If, during charging process, the voltage of the battery cell exceeds its designed maximum voltage, or if, during discharging process, the voltage of the battery cell drops excessively low, the battery cell may experience overvoltage or overdischarging. Overcharging or overdischarging may cause uncontrolled chemical reactions inside the battery cell, generating excessive heat and resulting in overheating of the battery cell. In addition, there may be defects in the design or manufacturing process of the battery cell, such as improper material selection, and poor battery cell assembly. These defects may lead to poor heat dissipation or uneven current distribution inside the battery cell, thereby increasing the risk of overheating or overvoltage of the battery cell. Therefore, the battery cell may experience overheating or overvoltage during charging or use.

The battery cell generally contains a certain amount of gas. When the battery cell is charged or discharged, gas generation or absorption reactions may occur in the solution in the electrolyte. The generation of these gases may cause an increase in gas pressure inside the battery cell, resulting in expansion and deformation of the battery cell. During the charging or discharging process of the battery cell, chemical reactions occur between the positive and negative electrode materials to form new compounds. These chemical reactions are accompanied by a change in volume, resulting in a change in the volume of the material inside the battery cell, and thereby causing expansion and deformation of the battery. When the battery cell is overcharged or overdischarged, the chemical reaction inside the battery cell may be out of control, such that excessive gas is generated or the structure of the electrode material is damaged, thereby causing expansion and deformation of the battery cell. The charging or discharging of the battery cell in a high-temperature environment may accelerate the internal chemical reaction and increase the generation of gas and the volume change. The high temperature may also cause expansion of internal substances of the battery cell, and also result in expansion and deformation of the battery cell.

To reduce the risk of explosion or fire caused by overheating or overvoltage of the battery cell during charging or use, pressure relief mechanisms such as anti-explosion valves and anti-explosion sheets are often provided on the housing of the battery cell, such that when the temperature or pressure of the battery cell exceeds a safety threshold, the gas or liquid inside the battery cell can be released to reduce the pressure inside the battery cell and reduce the risk of explosion of the battery cell. In this way, the safety performance of the battery cell can be improved, and potential safety risks can be reduced.

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of batteries, the market demand for batteries is also constantly increasing.

With the advancement of battery technology, various performances of batteries are continuously optimized, particularly the structural strength of the batteries, which is a critical aspect of battery performance. If the structural strength of a battery cannot be ensured, the use of the battery involves significant risks. Therefore, how to improve the structural strength of batteries remains an issue to be addressed.

Based on this, the embodiments of the present application provide a battery. The battery includes a case, a connecting member, and at least one battery cell, and the battery cell is disposed within the case; the connecting member includes a first connecting portion and a second connecting portion connected to each other, the first connecting portion is fixedly connected to the battery cell, and the second connecting portion is fixedly connected to the case, such that the connecting member can stably connect the battery cell and the case together, and the connection reliability between the battery cell and the case is improved, thereby improving the structural strength and rigidity of the battery, and improving the use reliability and prolonging the service life of the battery.

The technical solutions described in the embodiments of the present application are applicable to batteries and electric devices using batteries.

The electric device may be a vehicle, a mobile phone, a portable device, a laptop computer, a ship, a spacecraft, an electric toy, an electric tool, or the like. The spacecraft includes an airplane, a rocket, a space shuttle, a spaceship, and the like; the electric toy includes a stationary or mobile electric toy, such as a game console, an electric car toy, an electric ship toy, and an electric aircraft toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application. The battery may also be an energy storage device. The energy storage device includes an energy storage container, an energy storage electrical cabinet, and the like.

For ease of explanation, the following embodiments will be described by taking a vehicle as an example of the electric device.

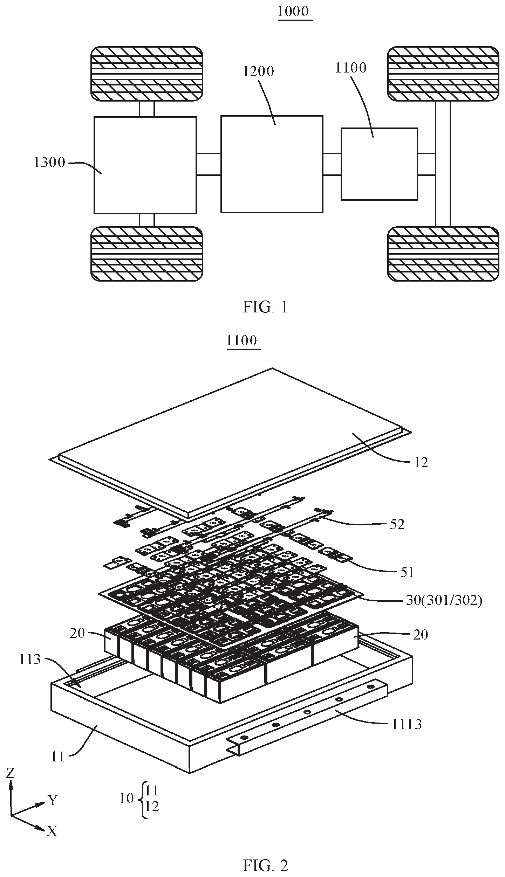

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 1100 is disposed inside the vehicle 1000, and the battery 1100 may be disposed at the bottom, head, or tail of the vehicle 1000. The battery 1100 may be configured to supply power to the vehicle 1000. For example, the battery 1100 may serve as an operation power source for the vehicle 1000. The vehicle 1000 may further include a controller 1200 and a motor 1300. The controller 1200 is configured to control the battery 1100 to supply power to the motor 1300, e.g., for the operation power needed by the vehicle 1000 for start-up, navigation, and driving.

In some embodiments of the present application, the battery 1100 may not only serve as an operation power source for the vehicle 1000, but also as a driving power source for the vehicle 1000 to, instead of or in part instead of fuel or natural gas, provide driving power for the vehicle 1000.

To meet different power usage requirements, the battery 1100 may include a plurality of battery cells 20. The plurality of battery cells 20 may be connected in series, in parallel, or in series-parallel. The series-parallel connection refers to a combination of series connection and parallel connection. The battery 1100 may also be referred to as a battery pack. Optionally, the plurality of battery cells 20 may be first connected in series, in parallel, or in series-parallel to form a battery module, and then a plurality of battery modules are connected in series, in parallel, or in series-parallel to form the battery 1100. That is, the plurality of battery cells 20 may be directly assembled into the battery 1100, or may be first assembled into battery modules, which are then assembled into the battery 1100.

Referring to FIG. 2, FIG. 2 is a schematic view of an exploded structure of a battery 1100 according to some embodiments of the present application. The battery 1100 has a height direction, a length direction, and a width direction. The height direction of the battery 1100 may refer to the first direction Z in the figure, the width direction of the battery 1100 may refer to the second direction X in the figure, and the length direction of the battery 1100 may refer to the third direction Y in the figure. The case 10 defines the outline structure of the battery 1100, the height direction of the case 10 may be the height direction of the battery 1100, the length direction of the case 10 is the length direction of the battery 1100, and the width direction of the case 10 is the width direction of the battery 1100.

The battery 1100 according to some embodiments of the present application includes a case 10, a connecting member 30, and at least one battery cell 20. The at least one battery cell 20 is disposed within the case 10, the connecting member 30 includes a first connecting portion 31 and a second connecting portion 32 connected to each other, the first connecting portion 31 is fixedly connected to the at least one battery cell 20, and the second connecting portion 32 is fixedly connected to the case 10.

The case 10 may refer to a component that provides a mounting environment for the battery cells 20. The interior of the case 10 is a hollow structure, and the battery cells 20 are accommodated in the case 10.

The connecting member 30 may refer to a component for connecting the battery cell 20 and the case 10, and the connecting member 30 includes a first connecting portion 31 and a second connecting portion 32. The first connecting portion 31 may refer to a portion of the connecting member 30 fixedly connected to the battery cell 20, and the second connecting portion 32 may refer to a component of the connecting member 30 fixedly connected to the case 10. The first connecting portion 31 and the second connecting portion 32 may be disposed on the same plane. In some embodiments, the first connecting portion 31 and the second connecting portion 32 may be a whole, that is, an integrally formed structure. Optionally, the first connecting portion 31 and the second connecting portion 32 may be two separate parts, and are connected to each other by a connection structure such as screwing, snap-fit, or bonding connection structures.

When a plurality of battery cells 20 are provided, some battery cells 20 of the plurality of battery cells 20 may be connected to the first connecting portion 31, or all of the plurality of battery cells 20 may be connected to the first connecting portion 31. The connection manner between the battery cells 20 and the first connecting portion 31 may refer to a fixed connection manner such as screwing, snap-fit, or bonding connection, and the connection manner between the second connecting portion 32 and the case 10 may also refer to a fixed connection manner such as screwing, snap-fit, or bonding connection.

For the battery 1100 according to the embodiments of the present application, the battery 1100 includes a case 10, a connecting member 30, and at least one battery cell 20, and the battery cell 20 is disposed within the case 10; the connecting member 30 includes a first connecting portion 31 and a second connecting portion 32 connected to each other, the first connecting portion 31 is fixedly connected to the battery cell 20, and the second connecting portion 32 is fixedly connected to the case 10, such that the connecting member 30 can stably connect the battery cell 20 and the case 10 together, and the connection reliability between the battery cell 20 and the case 10 is improved, thereby improving the structural strength and rigidity of the battery 1100, and improving the use reliability and prolonging the service life of the battery 1100.

In some embodiments, the case 10 includes a first case 11 and a second case 12, the first case 11 is provided with an accommodating cavity 113 having an opening, the battery cell 20 is disposed within the accommodating cavity 113, and the second case 12 lids the opening of the accommodating cavity 113; at least one of the first case 11 and the second case 12 is fixedly connected to the second connecting portion 32.

The case 10 may include two parts, one part is the first case 11, and the other part is the second case 12. The first case 11 forms the accommodating cavity 113 having an opening, the accommodating cavity 113 is configured to accommodate the battery cell 20, and the second case 12 lids the opening of the accommodating cavity 113 to close the opening of the accommodating cavity 113. The shapes of the first case 11 and the second case 12 may be determined based on the shape and arrangement form of the battery cells 20 in the case 10. In some embodiments, the first case 11 and the second case 12 may both be hollow rectangular parallelepipeds having an opening, and the opening of the first case 11 and the opening of the second case 12 are oppositely fitted together to close the opening of the accommodating cavity 113. In some embodiments, the second case 12 is plate-shaped to lid the opening of the first case 11, thereby closing the opening of the accommodating cavity 113.

At least one of the first case 11 and the second case 12 is fixedly connected to the second connecting portion 32. It can be understood that the first case 11 is fixedly connected to the second connecting portion 32, or the first case 11 is fixedly connected to the second connecting portion 32; or the second connecting portion 32 is fixedly connected to both the first case 11 and the second case 12.

By adopting the technical solution of the embodiments, the second case 12 can close the opening of the accommodating cavity 113, which can improve the protection effect of the case 10 on the battery cell 20, thereby improving the use reliability of the battery 1100. In addition, the connection position between the second connecting portion 32 and the case 10 is flexible and diversified, and thus the manufacturing process is simple and convenient.

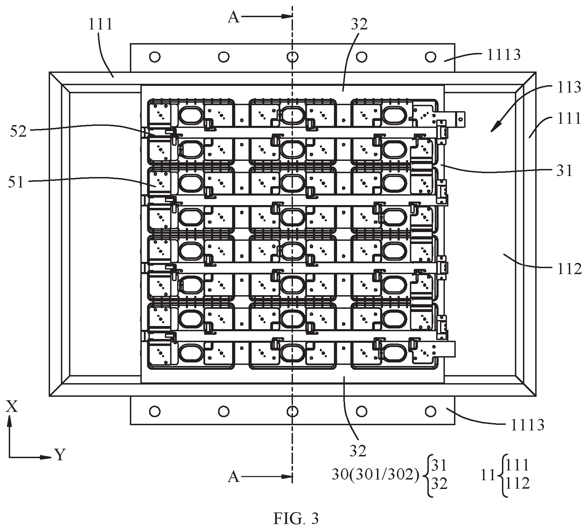

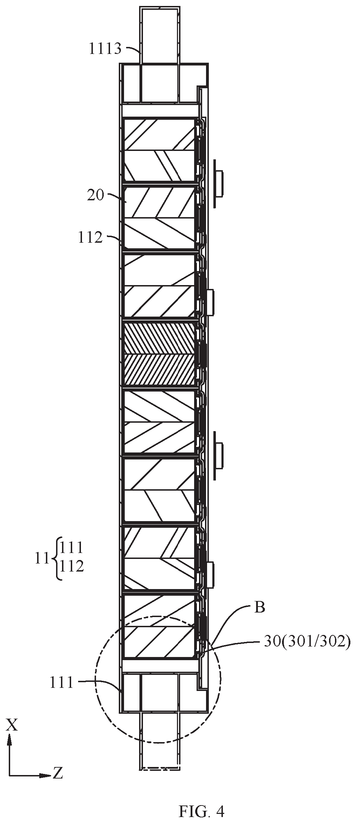

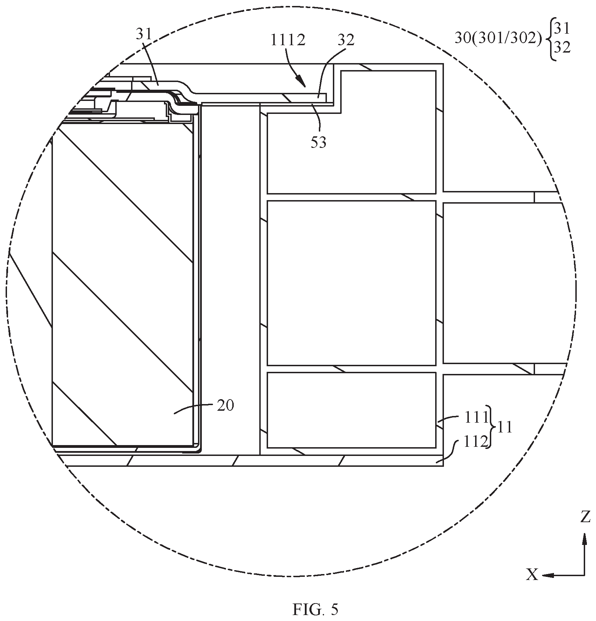

Referring to FIGs. 3 to 5 together, FIG. 3 is a schematic structural view of the battery 1100 shown in FIG. 2 with the second case 12 hidden. FIG. 4 is a cross-sectional view along line A-A in FIG. 3. FIG. 5 is a partially enlarged view of the portion B in FIG. 4.

In some embodiments, when the first case 11 is fixedly connected to the second connecting portion 32, the first case 11 includes a plurality of side wall portions 111 configured to be connected to the second case 12, and the plurality of side wall portions 111 are connected and define, in an enclosing manner, the accommodating cavity 113. At least one of the side wall portions 111 is fixedly connected to the second connecting portion 32.

The side wall portion 111 may refer to a portion of the first case 11 connected to the second case 12. The first case 11 includes a plurality of side wall portions 111, the plurality of side wall portions 111 are sequentially connected to define, in an enclosing manner, the side portion of the first case 11, and each side wall portion 111 forms a side wall of the accommodating cavity 113 of the first case 11. The plurality of side wall portions 111 may be sequentially connected end to end to form a closed frame structure, and the hollow cavity defined, in an enclosing manner, by the frame structure is the accommodating cavity 113. The opening on one side of the hollow cavity is lidded with the second case 12, and the opening on the other side is lidded with the bottom plate 112 to form the closed accommodating cavity 113. The shape of the frame structure may be adapted to the shape and arrangement manner of the battery cells 20. The side wall portion 111 may be of an internal hollow structure, a plate-shaped structure, or a solid structure. When the second case 12 is a sheet metal case, the side wall portion 111 may be a side plate-shaped structure of the second case 12. When the second case 12 is a frame-type case, the side wall portion 111 may be an edge beam of the second case 12.

At least one side wall portion 111 is fixedly connected to the second connecting portion 32. It can be understood that the second connecting portion 32 may be fixedly connected to a plurality of side wall portions 111 simultaneously, or may be fixedly connected to one side wall portion 111.

The side wall portions 111 of the second case 12 exhibit good structural strength, and the second connecting portion 32 is connected to the side wall portion 111, such that the connection strength between the second connecting portion 32 and the case 10 can be increased, thereby improving the structural strength and rigidity of the battery 1100.

In some embodiments, the second connecting portion 32 is bonded to the side wall portion 111.

It can be understood that the second connecting portion 32 and the side wall portion 111 are bonded by an adhesive 53. The adhesive 53 may be a structural adhesive, which refers to an adhesive having high strength, weather resistance, and aging resistance, and is mainly used for fixing and connecting various materials to enhance the stability and integrity of the structure. The adhesive 53 may be, but is not limited to, an epoxy resin adhesive, a silicone rubber, a polyurethane adhesive, an acrylate adhesive, or a polyvinyl acetal adhesive.

The second connecting portion 32 and the side wall portion 111 are connected by bonding, and the connection operation is simple, which is conducive to improving the production efficiency of the battery 1100.

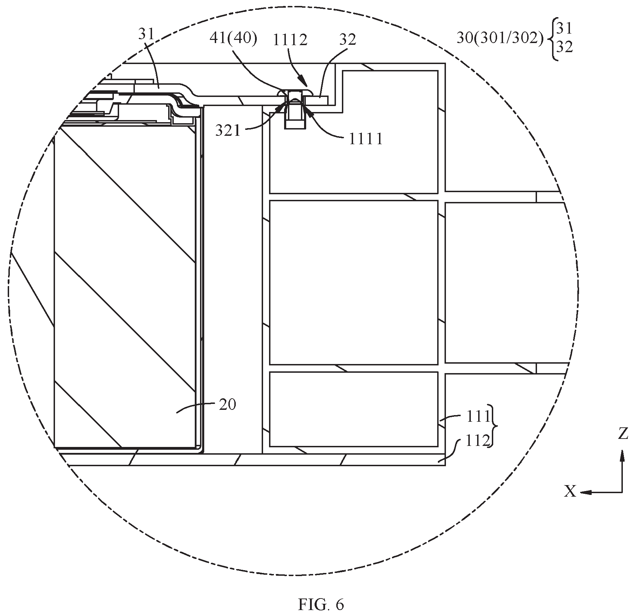

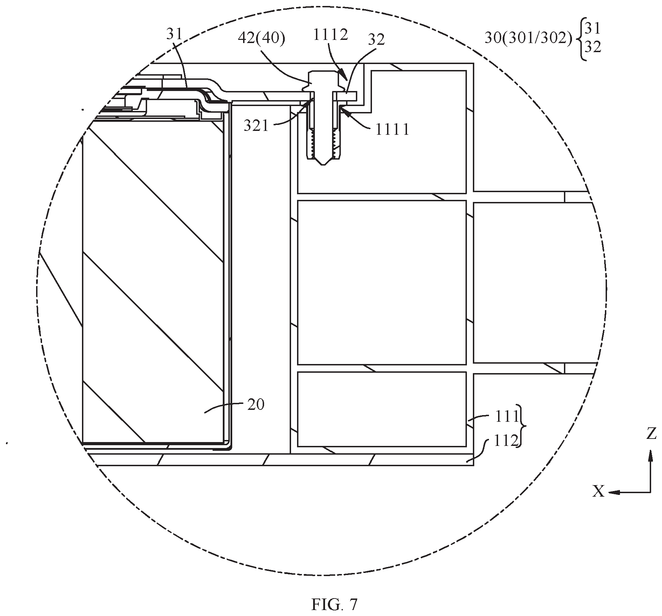

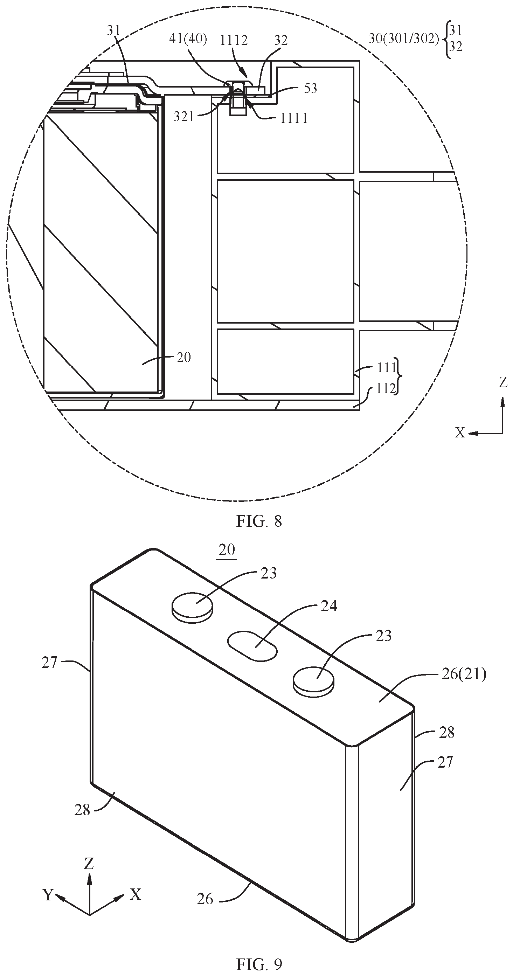

Referring to FIGs. 6 to 8 together, FIG. 6 is a partially enlarged view of the position B shown in FIG. 4 of a battery 1100 according to some other embodiments of the present application. FIG. 7 is a partially enlarged view of the position B shown in FIG. 4 of a battery 1100 according to yet some other embodiments of the present application. FIG. 8 is a partially enlarged view of the position B shown in FIG. 4 of a battery 1100 according to yet some other embodiments of the present application.

In some embodiments, the battery 1100 further includes a fastener 40, the second connecting portion 32 is provided with a first connecting hole 321, the side wall portion 111 is provided with a second connecting hole 1111, and the fastener 40 passes through the first connecting hole 321 and the second connecting hole 1111 to fixedly connect the second connecting portion 32 and the side wall portion 111.

The fastener 40 may refer to a type of components for fixing two or more components, and the fastener 40 is capable of preventing relative movement between two components or ensuring that components are in specific positions. The fastener 40 may be, but is not limited to, a bolt, a screw, a rivet, or the like.

The first connecting hole 321 may refer to a through hole provided on the second connecting portion 32 for the fastener 40 to pass through, and the second connecting hole 1111 may refer to a through hole provided on the side wall portion 111 for the fastener 40 to pass through. After the fastener 40 passes through the first connecting hole 321 and the second connecting hole 1111, the second connecting portion 32 and the side wall portion 111 can be fixedly connected. One or a plurality of fasteners 40 may be provided. When a plurality of fasteners 40 are provided, the plurality of fasteners 40 may be distributed in the length direction of the side wall portion 111 to improve the connection reliability between the second connecting portion 32 and the side wall portion 111.

The second connecting portion 32 and the side wall portion 111 are fixedly connected by the fastener 40, and the connection reliability of the fastener 40 is good, which is conducive to improving the structural strength and rigidity of the battery 1100; the connection operation of the fastener 40 is simple, such that the production efficiency of the battery 1100 can be improved.

In some embodiments, the fastener 40 is a rivet 41, and the rivet 41 passes through the first connecting hole 321 and the second connecting hole 1111 to fixedly connect the second connecting portion 32 and the side wall portion 111.

In some embodiments, the fastener 40 is a bolt 42, and the bolt 42 passes through the first connecting hole 321 and the second connecting hole 1111 to fixedly connect the second connecting portion 32 and the side wall portion 111. In some embodiments, the bolt 42 may be a rivet bolt.

In some embodiments, the fastener 40 is the rivet 41, the rivet 41 passes through the first connecting hole 321 and the second connecting hole 1111, and the adhesive 53 is filled between the rivet cap of the rivet 41 and the second connecting portion 32 to improve the reliability of the fixed connection between the second connecting portion 32 and the side wall portion 111, thereby improving the structural strength of the battery 1100.

In some embodiments, in the first direction Z, the fastener 40 does not protrude out from the end surface of the side wall portion 111 facing the second case 12, and the first direction Z is the direction from the first case 11 toward the second case 12.

It can be understood that the end surface of the fastener 40 facing the second case 12 is flush with the end surface of the side wall portion 111 facing the second case 12; or, the end surface of the fastener 40 facing the second case 12 is lower than the end surface of the side wall portion 111 facing the second case 12.

The fastener 40 does not protrude out from the end surface of the side wall portion 111 facing the second case 12, and the fastener 40 is less likely to interfere with the second case 12, which is conducive to improving the structural strength and assembly efficiency of the battery 1100.

In some embodiments, an accommodating recess 1112 is formed in an end portion of the side wall portion 111 facing the second case 12, and the second connecting portion 32 is fixed within the accommodating recess 1112.

The accommodating recess 1112 may refer to a recess structure formed by the side wall portion 111 for accommodating the second connecting portion 32. The surface of the side wall portion 111 facing the second case 12 is recessed in a direction opposite to the second case 12 to form the accommodating recess 1112, and the accommodating recess 1112 is in communication with the accommodating cavity 113 to facilitate accommodating the second connecting portion 32.

The second connecting portion 32 is accommodated within the accommodating recess 1112, and thus the risk of interference between the second connecting portion 32 and the second case 12 can be reduced, which is conducive to improving the structural strength and assembly efficiency of the battery 1100.

In some embodiments, in the first direction Z, the second connecting portion 32 does not protrude out from the end surface of the side wall portion 111 facing the second case 12, and the first direction Z is the direction from the first case 11 toward the second case 12.

It can be understood that the second connecting portion 32 is completely accommodated in the accommodating recess 1112 and does not protrude out from the accommodating recess 1112. The end surface of the second connecting portion 32 facing the second case 12 is flush with the end surface of the side wall portion 111 facing the second case 12; or, the end surface of the second connecting portion 32 facing the second case 12 is lower than the end surface of the side wall portion 111 facing the second case 12.

The second connecting portion 32 is completely accommodated within the accommodating recess 1112, such that the second connecting portion 32 is less likely to interfere with the second case 12, which is conducive to improving the structural strength and assembly efficiency of the battery 1100.

In some embodiments, the second connecting portion 32 is supported on the wall surface of the accommodating recess 1112 facing the second case 12, and the second connecting portion 32 is also bonded to the wall surface of the accommodating recess 1112 facing the second case 12 by the adhesive 53.

In some embodiments, the second connecting hole 1111 is formed in the wall surface of the accommodating recess 1112 facing the second case 12, and the fastener 40 sequentially passes through the first connecting hole 321 and the second connecting hole 1111 to fix the second connecting portion 32 on the side wall portion 111. The end portion of the fastener 40 facing the second case 12 is also accommodated in the accommodating recess 1112, and does not protrude out from the end surface of the side wall portion 111 facing the second case 12.

In some embodiments, two opposite sides of the first connecting portion 31 are connected to the second connecting portions 32, and the two second connecting portions 32 are fixedly connected to the two side wall portions 111 disposed opposite to each other, respectively.

It can be understood that two second connecting portions 32 are provided, the two second connecting portions 32 are respectively connected to two opposite side portions of the first connecting portion 31, and the two second connecting portions 32 are fixedly connected to the corresponding side wall portions 111, respectively.

As an example, four side wall portions 111 are provided, two of the side wall portions 111 extend in the length direction of the battery 1100 and are spaced apart from each other in the width direction of the battery 1100, the other two side wall portions 111 extend in the width direction of the battery 1100 and are in the length direction of the battery 1100, and the four side wall portions 111 define, in an enclosing manner, a rectangular frame structure. Two second connecting portions 32 are provided, the two second connecting portions 32 are respectively disposed on two opposite sides of the first connecting portion 31 in the second direction X, and the two side wall portions 111 spaced apart from each other in the second direction X are fixedly connected to the two second connecting portions 32, respectively. In addition, in other embodiments, the second connecting portion 32 may also be fixedly connected to the side wall portion 111 in a one-to-one correspondence.

The two second connecting portions 32 are respectively connected to the two side wall portions 111, such that the connection reliability between the connecting member 30 and the case 10 is good, and the structural strength and rigidity of the battery 1100 can be better improved.

In some embodiments, the side wall portion 111 connected to the second connecting portion 32 is provided with a mounting structure 1113 for mounting the battery 1100.

It can be understood that the side wall portion 111 provided with the mounting structure 1113 is connected to the second connecting portion 32. The mounting structure 1113 may refer to a portion of the battery 1100 configured to be fixed to the vehicle 1000, and the structure may refer to a mounting beam provided on the side wall portion 111. The mounting beam may be an integrally formed structure with the side wall portion 111, or may be a separately formed structure, and the mounting beam is connected to the side wall portion 111 by a connection structure.

By adopting the technical solution of the embodiments, the side wall portion 111 provided with the mounting structure 1113 exhibits good structural strength, and the second connecting portion 32 is connected to the side wall portion 111, such that the connection strength between the second connecting portion 32 and the case 10 can be increased, thereby improving the structural strength and rigidity of the battery 1100.

In some embodiments, the connecting member 30 is provided on one side of the battery cell 20 facing the second case 12 and/or one side of the battery cell facing away from the second case 12.

It can be understood that one side of the battery cell 20 facing the second case 12 is provided with the connecting member 30, and the connecting member 30 is disposed between the second case 12 and the battery cell 20; or, one side of the battery cell 20 facing away from the second case 12 is provided with the connecting member 30, and the battery cell 20 is disposed between the second case 12 and the connecting member 30; or, one side of the battery cell 20 facing the second case 12 and one side of the battery cell facing away from the second case 12 are both provided with the connecting members 30, two opposite sides of the battery cell 20 are both provided with the connecting members 30, and the battery cell 20 is disposed between the two connecting members 30, such that the connection reliability between the battery cell 20 and the case 10 is better, and the structural strength of the battery 1100 is better.

In some embodiments, when the second case 12 is disposed above the first case 11, the connecting member 30 may be disposed above the battery cell 20 or below the battery cell 20; or, both the upper and lower sides of the battery cell 20 are provided with the connecting members 30.

The position of the connecting member 30 can be set flexibly to meet different use requirements.

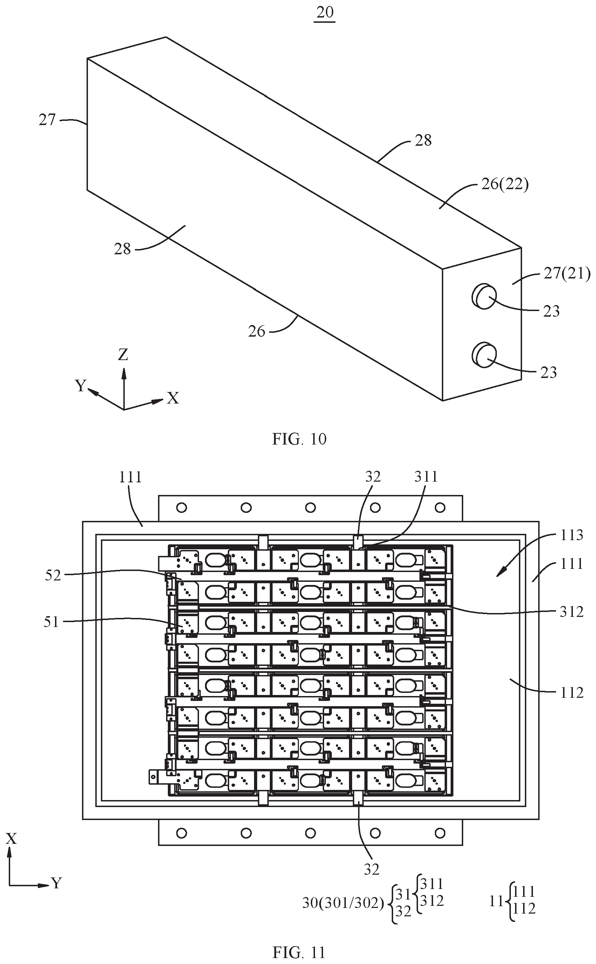

Referring to FIGs. 9 and 10 together, FIG. 9 is a schematic structural view of a battery cell 20 according to some embodiments of the present application. FIG. 10 is a schematic structural view of a battery cell 20 according to some other embodiments of the present application.

For ease of understanding and description, only a rectangular parallelepiped battery cell 20 is illustrated in the embodiments according to the present application. It should be understood that the embodiments according to the present application are also applicable to a cylinder battery cell or pouch battery cell. This is not limited in the embodiments of the present application.

The battery cell 20 has a height direction, a length direction, and a width direction, the height direction of the battery cell 20 may be parallel to the first direction Z, the width direction of the battery cell 20 may be parallel to the second direction X, and the length direction of the battery cell 20 may be parallel to the third direction Y. Such an arrangement of the battery cell 20 within the case 10 can better utilize the internal space of the case 10 and facilitate the mounting of other components. In addition, in other embodiments, other arrangement manners may also be adopted for the battery cell 20.

With reference to FIGs. 9 and 10, the battery cell 20 includes two first side surfaces 26 distributed in the height direction thereof, and the height of the battery cell 20 is defined between the two first side surfaces 26. The battery cell 20 further includes two second side surfaces 27 distributed in the length direction thereof, and the two second side surfaces 27 define the length of the battery cell 20. The battery cell 20 further includes two third side surfaces 28 distributed in the width direction thereof, and the two third side surfaces 28 define the width of the battery cell 20. For a flat battery cell 20, such as a prismatic battery cell, its width is smaller than its length and height, and its third side surface 28 has the largest area, so the third side surface 28 is also referred to as a large surface.

In some embodiments, the battery cell 20 has a first surface 21, and the first surface 21 is provided with an electrode terminal 23; the first surface 21 is connected to the first connecting portion 31; or, the battery cell 20 has a second surface 22 adjacent to the first surface 21, and the second surface 22 is connected to the first connecting portion 31.

The first surface 21 may refer to the surface of the battery cell 20 on which the electrode terminal 23 is provided. As an example, in the battery cell 20 shown in FIG. 9, the electrode terminal 23 is disposed on the first side surface 26, that is, the first side surface 26 is the first surface 21. In addition, in other examples, the first surface 21 may also be other side surfaces of the battery cell 20, for example, the second side surface 27 or the third side surface 28.

The second surface 22 may refer to the surface of the battery cell 20 adjacent to the first surface 21. As an example, in the battery cell 20 shown in FIG. 10, the electrode terminal 23 is disposed on the second side surface 27, the first surface 21 is the second side surface 27, and the first side surface 26 is the second surface 22. In addition, in other examples, the second surface 22 may be other side surfaces of the battery cell 20.

In a possible embodiment, the battery cell 20 has the first surface 21, the first surface 21 is provided with the electrode terminal 23, and the first surface 21 is connected to the first connecting portion 31. With reference to FIGs. 2 and 9, after a plurality of battery cells 20 are grouped to form a battery module, especially prismatic battery cells, the area of the battery module on the surface where the first surface 21 is located is large, and the connection area between the first connecting portion 31 and the first surface 21 of the battery cell 20 is large, such that the connection reliability is good, which is conducive to improving the structural strength and rigidity of the battery 1100.

In another possible embodiment, the battery cell 20 has the first surface 21, and the first surface 21 is provided with the electrode terminal 23, the first surface 21 is connected to the first connecting portion 31, the battery cell 20 has a second surface 22 adjacent to the first surface 21, and the second surface 22 is connected to the first connecting portion 31. With reference to FIGs. 2 and 10, after a plurality of battery cells 20 are grouped to form a battery module, especially blade battery cells, the area of the battery module on the surface where the second surface 22 is located is large, and the connection area between the first connecting portion 31 and the second surface 22 of the battery cell 20 is large, such that the connection reliability is good, which is conducive to improving the structural strength and rigidity of the battery 1100.

The connection position between the first connecting portion 31 and the battery cell 20 can be flexibly set to meet the use requirements of different types of batteries 1100.

In some embodiments, when the first surface 21 is connected to the first connecting portion 31, the first surface 21 is bonded to the first connecting portion 31.

It can be understood that the first surface 21 and the first connecting portion 31 are bonded by an adhesive, so as to achieve fixed connection between the first connecting portion 31 and the battery cell 20. The fixed connection manner is simple, and the production efficiency of the battery 1100 can be improved.

In some embodiments, when the second surface 22 is connected to the first connecting portion 31, the second surface 22 is bonded to the first connecting portion 31.

It can be understood that the second surface 22 and the first connecting portion 31 are bonded by an adhesive, so as to achieve fixed connection between the first connecting portion 31 and the battery cell 20. The fixed connection manner is simple, and the production efficiency of the battery 1100 can be improved.

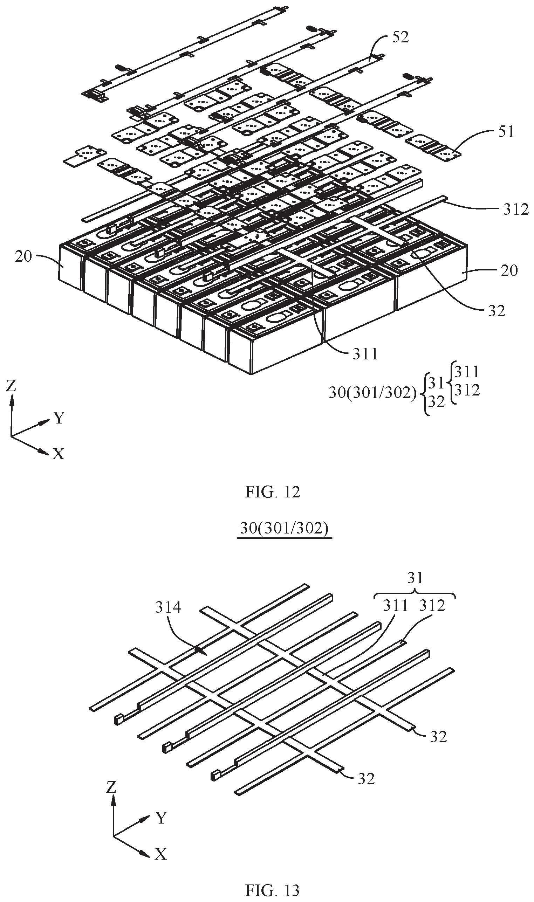

Referring to FIGs. 11 to 13 together, FIG. 11 is a schematic structural view of a battery 1100 with the second case 12 hidden according to some other embodiments of the present application. FIG. 12 is a schematic view of an exploded structure of the battery 1100 shown in FIG. 11 with the case 10 hidden. FIG. 13 is a schematic structural view of the connecting member 30 shown in FIG. 12.

In some embodiments, a plurality of battery cells 20 are provided, the plurality of battery cells 20 are arranged in a matrix array in the second direction X and the third direction Y, and the second direction X is perpendicular to the third direction Y; the first connecting portion 31 includes a first connecting sub-portion 311 extending in the second direction X and a second connecting sub-portion 312 extending in the third direction Y, the first connecting sub-portion 311 is fixedly connected to the plurality of battery cells 20 arranged in the second direction X, the second connecting sub-portion 312 is fixedly connected to the plurality of battery cells 20 arranged in the third direction Y, and at least one of the first connecting sub-portion 311 and the second connecting sub-portion 312 is connected to the second connecting portion 32.

A plurality of battery cells 20 are provided, the plurality of battery cells 20 are arranged in a matrix array in the second direction X and the third direction Y, and the second direction X is perpendicular to the third direction Y. It can be understood that the plurality of battery cells 20 are arranged into a plurality of columns of battery cells 20, the plurality of columns of battery cells 20 are sequentially arranged in the third direction Y, and the plurality of battery cells 20 in each column of battery cells 20 may be sequentially arranged in the second direction X.

The first connecting sub-portion 311 may refer to a portion of the first connecting portion 31 extending in the second direction X, and the second connecting sub-portion 312 may refer to a portion of the first connecting portion 31 extending in the third direction Y. The first connecting sub-portion 311 and the second connecting sub-portion 312 may be a whole, that is, an integrally formed structure. Optionally, the first connecting sub-portion 311 and the second connecting sub-portion 312 may also be two separate components, and are connected to each other by a connection structure.

In some embodiments, the first connecting portion 31 includes at least one first connecting sub-portion 311 and at least one second connecting sub-portion 312, the at least one first connecting sub-portion 311 is fixedly connected to one group of the plurality of battery cells 20 arranged in the second direction X, and the at least one second connecting sub-portion 312 is fixedly connected to one group of the plurality of battery cells 20 arranged in the third direction Y. As an example, the first connecting portion 31 includes a plurality of first connecting sub-portions 311 and a plurality of second connecting sub-portions 312, and the plurality of first connecting sub-portions 311 and the plurality of second connecting sub-portions 312 form a mesh structure; the plurality of first connecting sub-portions 311 are fixedly connected to a plurality of groups of the plurality of battery cells 20 arranged in the second direction X, respectively, and the plurality of second connecting sub-portions 312 are fixedly connected to a plurality of groups of the plurality of battery cells 20 arranged in the third direction Y, respectively.

At least one of the first connecting sub-portion 311 and the second connecting sub-portion 312 is connected to the second connecting portion 32. It can be understood that the first connecting sub-portion 311 is connected to the second connecting portion 32, or the second connecting sub-portion 312 is connected to the second connecting portion 32, or the second connecting sub-portions 312 are connected to both the first connecting sub-portion 311 and the third connecting sub-portion 313.

When a plurality of first connecting sub-portions 311 are provided and the first connecting sub-portion 311 is connected to the second connecting portion 32, part of the first connecting sub-portions 311 may be connected to the second connecting portion 32, or all the first connecting sub-portions 311 may be connected to the second connecting sub-portions 312. One end of the first connecting sub-portion 311 in the second direction X may be connected to the second connecting portion 32, or both ends of the first connecting sub-portion 311 in the second direction X may be connected to the second connecting portion 32. Similarly, when a plurality of second connecting sub-portions 312 are provided and the second connecting sub-portions 312 are connected to the second connecting portion 32, part of the second connecting sub-portions 312 may be connected to the second connecting portion 32, or all the second connecting sub-portions 312 may be connected to the second connecting sub-portions 312. One end of the second connecting sub-portion 312 in the third direction Y may be connected to the second connecting portion 32, or both ends of the second connecting sub-portion 312 in the third direction Y may be connected to the second connecting portion 32.

As an example, two first connecting sub-portions 311 are provided, seven second connecting sub-portions 312 are provided, the two first connecting sub-portions 311 and the seven second connecting sub-portions 312 form a mesh structure, both ends of the two first connecting sub-portions 311 in the second direction X are connected to the second connecting portion 32, the first connecting sub-portions 311 and the second connecting portion 32 are of an integrally formed structure, and the seven second connecting sub-portions 312 are not connected to the second connecting portion 32.

The first connecting sub-portion 311 can fixedly connect the plurality of battery cells 20 arranged in the second direction X, and the second connecting sub-portion 312 can fixedly connect the plurality of battery cells 20 arranged in the third direction Y, such that the plurality of battery cells 20 are fixedly connected in the second direction X and the third direction Y, the plurality of battery cells 20 form a whole, and the overall rigidity of the grouped battery cells 20 can be improved, thereby improving the overall rigidity of the battery 1100, effectively improving the modal characteristics of the battery 1100, allowing the battery 1100 to avoid the resonance frequency of the whole vehicle, and thus improving the mechanical strength and prolonging the service life of the battery 1100. In addition, the plurality of battery cells 20 are constrained by the first connecting sub-portion 311 and the second connecting sub-portion 312, which can also improve the capability of the battery cells 20 to resist expansion and deformation, and is conducive to improving the performance of the battery 1100.

In some embodiments, the first connecting sub-portion 311 is fixedly connected to two adjacent battery cells 20 arranged in the third direction Y; and/or, the second connecting sub-portion 312 is fixedly connected to two adjacent battery cells 20 arranged in the second direction X.

In a possible embodiment, the first connecting sub-portion 311 is fixedly connected to two adjacent battery cells 20 arranged in the third direction Y, such that one first connecting sub-portion 311 can fixedly connect two adjacent groups of the plurality of battery cells 20 arranged in the second direction X, which can improve the connection reliability of the two adjacent groups of the plurality of battery cells 20 arranged in the second direction X, thereby improving the structural strength and rigidity of the battery 1100; the structure of the connecting member 30 can also be simplified, and the manufacturing cost of the connecting member 30 is reduced, which is also conducive to improving the production efficiency of the battery 1100; furthermore, in this case, the first connecting sub-portion 311 can cover at least part of the gap between two adjacent battery cells 20 arranged in the third direction Y. In addition, in other embodiments, each group of the plurality of battery cells 20 arranged in the second direction X may be correspondingly connected to one first connecting sub-portion 311.

In a possible embodiment, the second connecting sub-portion 312 is fixedly connected to two adjacent battery cells 20 arranged in the second direction X, such that one second connecting sub-portion 312 can fix two adjacent groups of the plurality of battery cells 20 arranged in the third direction Y, which can improve the connection reliability of the two adjacent groups of the plurality of battery cells 20 arranged in the third direction Y, thereby improving the structural strength and rigidity of the battery 1100; the structure of the connecting member 30 can also be simplified, and the manufacturing cost of the connecting member 30 is reduced, which is also conducive to improving the production efficiency of the battery 1100; furthermore, in this case, the second connecting sub-portion 312 can cover at least part of the gap between two adjacent battery cells 20 arranged in the second direction X. In addition, in other embodiments, each group of the plurality of battery cells 20 arranged in the third direction Y may be correspondingly connected to one second connecting sub-portion 312.

In a possible embodiment, the first connecting sub-portion 311 is fixedly connected to two adjacent battery cells 20 arranged in the third direction Y; the second connecting sub-portion 312 is fixedly connected to two adjacent battery cells 20 arranged in the second direction X, such that one first connecting sub-portion 311 can fixedly connect two adjacent groups of the plurality of battery cells 20 arranged in the second direction X, and one second connecting sub-portion 312 can fix two adjacent groups of the plurality of battery cells 20 arranged in the third direction Y, which can better improve the structural strength of the plurality of battery cells 20 and the structural strength of the battery 1100.

The arrangement of the first connecting sub-portion 311 and/or the second connecting sub-portion 312 can improve the structural strength of the plurality of battery cells 20 and the structural strength and rigidity of the battery 1100. The structure of the connecting member 30 can also be simplified, and the manufacturing cost of the connecting member 30 is reduced, which is also conducive to improving the production efficiency of the battery 1100.

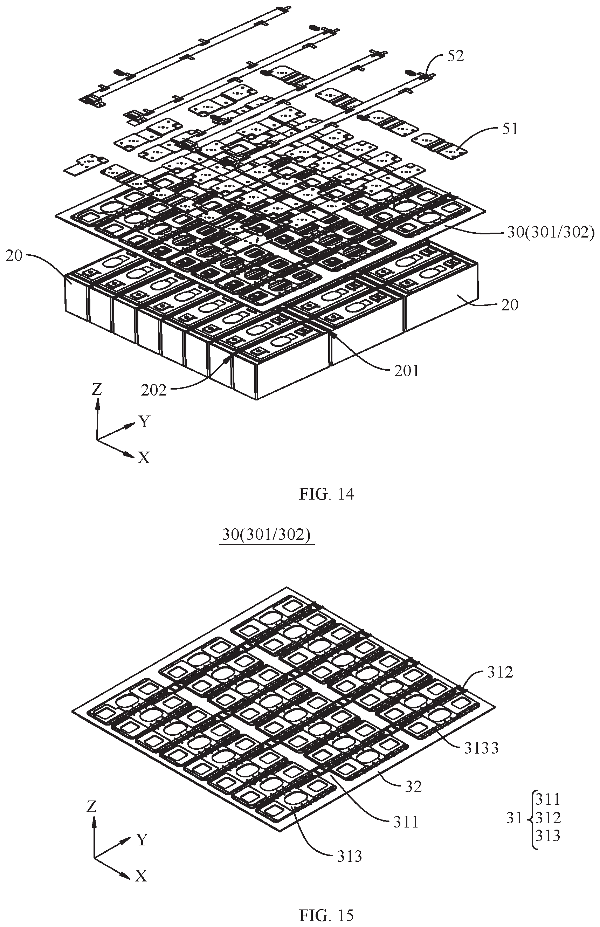

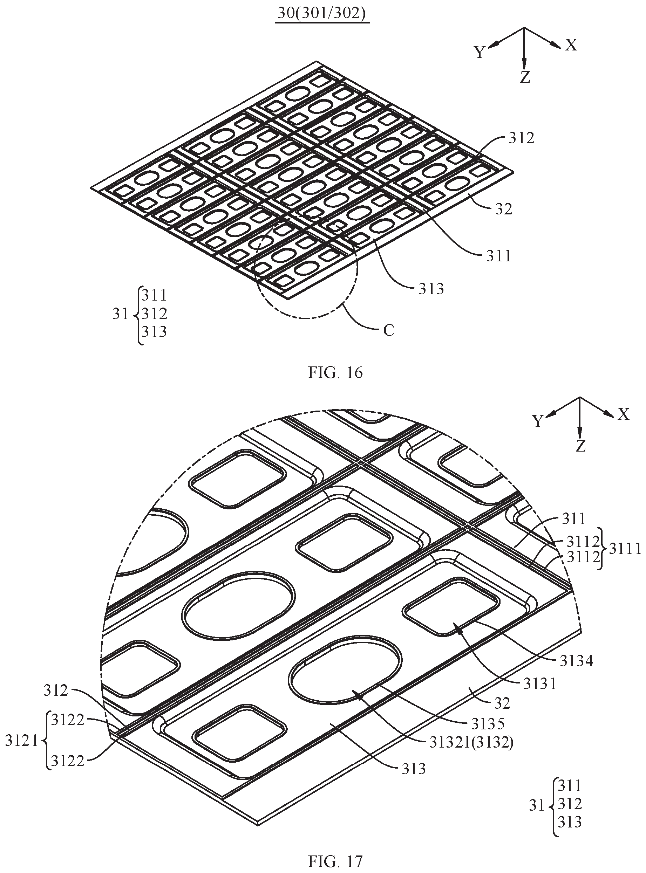

Referring to FIGs. 14 to 17 together, FIG. 14 is a schematic view of an exploded structure of a battery 1100 with the case 10 hidden according to yet some other embodiments of the present application. FIG. 15 is a schematic structural view of the connecting member 30 shown in FIG. 14 from one perspective. FIG. 16 is a schematic structural view of the connecting member 30 shown in FIG. 14 from another perspective. FIG. 17 is a partially enlarged view of the portion C in FIG. 16.

In some embodiments, the first connecting sub-portion 311 and the second connecting sub-portion 312 define, in an enclosing manner, an accommodating region 314; the first connecting portion 31 further includes a third connecting sub-portion 313, the third connecting sub-portion 313 connects the first connecting sub-portion 311 and the second connecting sub-portion 312, and the third connecting sub-portion 313 is disposed within the accommodating region 314.

The first connecting sub-portion 311 extends in the second direction X, the second connecting sub-portion 312 extends in the third direction Y, and the first connecting sub-portion 311 and the second connecting sub-portion 312 are connected to each other to form a mesh structure. The hollow zone in the mesh structure is defined as the accommodating region 314, and the structure filling the hollow zone is defined as the third connecting sub-portion 313. The first connecting sub-portion 311, the second connecting sub-portion 312, and the third connecting sub-portion 313 may form a plate-shaped structure, and the third connecting sub-portion 313 may completely fill the accommodating region 314, or may only fill part of the accommodating region 314.

At least one of two ends of the third connecting sub-portion 313 in the second direction X is connected to the second connecting sub-portion 312, and at least one of two ends of the third connecting sub-portion 313 in the third direction Y is connected to the first connecting sub-portion 311. The first connecting sub-portion 311, the second connecting sub-portion 312, and the third connecting sub-portion 313 may be an integrally formed structure.

The third connecting sub-portion 313 can improve the connection reliability of the first connecting sub-portion 311 and the second connecting sub-portion 312, thereby improving the structural strength of the connecting member 30, and further improving the structural strength and rigidity of the battery 1100.

In some embodiments, the third connecting sub-portion 313 is provided with a reinforcing rib 3133 to improve the structural strength of the connecting member 30, thereby improving the structural strength and rigidity of the battery 1100.

In some embodiments, the battery cell 20 is provided with the electrode terminal 23, and the third connecting sub-portion 313 is provided with a clearance hole 3131 for providing clearance for the electrode terminal 23; a first blocking portion 3134 is connected to the third connecting sub-portion 313, the first blocking portion 3134 protrudes from the surface of the third connecting sub-portion 313 facing the battery cell 20, and the first blocking portion 3134 is arranged around the periphery of the clearance hole 3131; and/or the battery cell 20 is provided with a pressure relief mechanism 24, the third connecting sub-portion 313 is provided with a discharge structure 3132, and the discharge structure 3132 is disposed opposite to the pressure relief mechanism 24 to release emissions discharged through the pressure relief mechanism 24; a second blocking portion 3135 is connected to the third connecting sub-portion 313, the second blocking portion 3135 protrudes from the surface of the third connecting sub-portion 313 facing the battery cell 20, and the second blocking portion 3135 is arranged around the periphery of the discharge structure 3132.

The clearance hole 3131 may refer to a through hole through which the third connecting sub-portion 313 provides clearance for the electrode terminal 23, and the clearance hole 3131 penetrates through the third connecting sub-portion 313, such that the electrode terminal 23 can pass through the clearance hole 3131 to facilitate electrical connection between the electrode terminal 23 and the busbar component 51.

The first blocking portion 3134 may refer to a protruding structure on the third connecting sub-portion 313 that protrudes from the surface of the third connecting sub-portion 313 facing the battery cell 20, and the first blocking portion 3134 is an annular structure and is arranged around the periphery of the clearance hole 3131. In some embodiments, the first blocking portion 3134 extends along the periphery of the clearance hole 3131 to surround the clearance hole 3131. In some embodiments, the side wall of the inner ring of the first blocking portion 3134 may be coplanar with the hole wall of the clearance hole 3131. In some embodiments, the first blocking portion 3134 and the third connecting sub-portion 313 may be an integrally formed structure. The first blocking portion 3134 may also be a separate component, and the first blocking portion 3134 is fixed to the third connecting sub-portion 313 by screwing, snap-fit connection, bonding, or other manners. For example, the first blocking portion 3134 may be a sealing strip.

The pressure relief mechanism 24 refers to an element or a component that is actuated to relieve the internal pressure of the battery cell 20 when the internal pressure or temperature reaches a preset threshold. The term "actuate" means that the pressure relief mechanism 24 generates an action to allow the release of the internal pressure and the reduction of the internal temperature of the battery cell 20. The actions generated by the pressure relief mechanism 24 may include, but are not limited to: rupture, tearing, or melting of at least part of the pressure relief mechanism 24. After the pressure relief mechanism 24 is actuated, high-temperature and high-pressure substances inside the battery cell 20 are discharged outwards from the pressure relief mechanism 24 as emissions. The preset threshold may be adjusted according to different design requirements. The preset threshold may depend on the material of one or more of the positive electrode plate, the negative electrode plate, the electrolytic solution, and the separator in the battery cell 20. The pressure relief mechanism 24 may be, for example, a pressure-sensitive or temperature-sensitive element or component, that is, when the internal pressure or temperature of the battery cell 20 reaches the preset threshold, the pressure relief mechanism 24 is actuated, thereby forming a passage through which the internal pressure can be relieved. The emissions from the battery cell 20 include, but are not limited to: electrolytic solution, dissolved or split positive and negative electrode plates, fragments of separator, high-temperature and high-pressure gas generated by reaction, flame, and the like.

The discharge structure 3132 may refer to a component provided on the third connecting sub-portion 313 for releasing the emissions discharged from the discharge mechanism. The discharge structure 3132 is disposed opposite to the pressure relief mechanism 24, and after the pressure relief mechanism 24 is actuated, the discharge structure 3132 may form a passage, through which the emissions discharged from the pressure relief mechanism 24 can pass through the third connecting sub-portion 313, thereby achieving the release of the emissions. In some embodiments, the discharge structure 3132 may be a discharge hole 31321 penetrating through the third connecting sub-portion 313, such that the emissions can be directly discharged from the discharge hole 31321. In some embodiments, the discharge structure 3132 may also be a weak structure provided on the third connecting sub-portion 313, and after the pressure relief mechanism 24 is actuated, the emissions rupture the weak structure, thereby achieving the release of the emissions. The weak structure may refer to a component such as a score, a groove, or a through hole that weakens the structural strength. In some embodiments, the discharge structure 3132 may also be an anti-explosion valve provided on the third connecting sub-portion 313, and after the pressure relief mechanism 24 is actuated, the emissions drive the anti-explosion valve to open, thereby achieving the release of the emissions.

The second blocking portion 3135 may refer to a protruding structure on the third connecting sub-portion 313 that protrudes from the surface of the third connecting sub-portion 313 facing the battery cell 20, and the second blocking portion 3135 is an annular structure and is arranged around the periphery of the discharge structure 3132. In some embodiments, the second blocking portion 3135 extends along the periphery of the pressure relief mechanism 24 to surround the discharge structure 3132. In some embodiments, the side wall of the inner ring of the second blocking portion 3135 may be coplanar with the periphery of the discharge structure 3132. For example, when the discharge structure 3132 is a through hole, the side wall of the inner ring of the second blocking portion 3135 is coplanar with the hole wall of the through hole. In some embodiments, the second blocking portion 3135 and the third connecting sub-portion 313 may be an integrally formed structure. The second blocking portion 3135 may also be a separate component, and the second blocking portion 3135 is fixed to the third connecting sub-portion 313 by screwing, snap-fit connection, bonding, or other manners. For example, the second blocking portion 3135 may be a sealing strip, or the like.

In some cases, the surface of the battery cell 20 facing the connecting member 30 is covered with an adhesive, and is bonded to the third connecting sub-portion 313 by the adhesive, thereby achieving fixed connection between the third connecting sub-portion 313 and the battery cell 20. During the process of bonding the third connecting sub-portion 313 and the battery cell 20, the adhesive easily overflows to the electrode terminal 23, the pressure relief mechanism 24, and the discharge structure 3132. When the adhesive overflows to the electrode terminal 23, the electrical connection between the electrode terminal 23 and the busbar component 51 may be affected, such that the use reliability of the battery cell 20 is affected. When the adhesive overflows to the pressure relief mechanism 24 and the discharge structure 3132, the operation of the pressure relief mechanism 24 and the discharge structure 3132 may be affected, thereby affecting the release of emissions and affecting the use reliability of the battery 1100. In some cases, during the production and manufacturing process of the battery 1100, some solid particles (such as metal particles) may fall on the surface of the battery cell 20 facing the insulating member 30, and the solid particles may move to the electrode terminal 23, the pressure relief mechanism 24, and the discharge structure 3132, which may affect the electrical connection between the electrode terminal 23 and the busbar component 51 or the operation of the pressure relief mechanism 24 and the discharge structure 3132, thereby affecting the use reliability of the battery cell 20 and further the use reliability of the battery 1100.

In a possible embodiment, the battery cell 20 is provided with the electrode terminal 23, and the third connecting sub-portion 313 is provided with the clearance hole 3131 for providing clearance for the electrode terminal 23; a first blocking portion 3134 is connected to the third connecting sub-portion 313, the first blocking portion 3134 protrudes from the surface of the third connecting sub-portion 313 facing the battery cell 20, and the first blocking portion 3134 is arranged around the periphery of the clearance hole 3131; the first blocking portion 3134 is capable of blocking the adhesive or solid particles between the battery cell 20 and the third connecting sub-portion 313 from contacting the electrode terminal 23, thereby reducing the influence of the adhesive or solid particles on the electrical connection between the electrode terminal 23 and the busbar component 51, improving the reliability of the connection between the electrode terminal 23 and the busbar component 51, and further improving the use reliability of the battery 1100.

In another possible embodiment, the battery cell 20 is provided with the pressure relief mechanism 24, the third connecting sub-portion 313 is provided with the discharge structure 3132, and the discharge structure 3132 is disposed opposite to the pressure relief mechanism 24 to release the emissions discharged through the pressure relief mechanism 24; a second blocking portion 3135 is connected to the third connecting sub-portion 313, the second blocking portion 3135 protrudes from the surface of the third connecting sub-portion 313 facing the battery cell 20, and the second blocking portion 3135 is arranged around the periphery of the discharge structure 3132; the second blocking portion 3135 is capable of blocking the adhesive or solid particles between the battery cell 20 and the third connecting sub-portion 313 from contacting the pressure relief mechanism 24 and the discharge structure 3132, such that the emissions can be promptly released to improve the use reliability of the battery 1100.

In yet another possible embodiment, the battery cell 20 is provided with the electrode terminal 23, and the third connecting sub-portion 313 is provided with the clearance hole 3131 for providing clearance for the electrode terminal 23; a first blocking portion 3134 is connected to the third connecting sub-portion 313, the first blocking portion 3134 protrudes from the surface of the third connecting sub-portion 313 facing the battery cell 20, and the first blocking portion 3134 is arranged around the periphery of the clearance hole 3131; the battery cell 20 is provided with the pressure relief mechanism 24, the third connecting sub-portion 313 is provided with the discharge structure 3132, and the discharge structure 3132 is disposed opposite to the pressure relief mechanism 24 to release emissions discharged through the pressure relief mechanism 24; a second blocking portion 3135 is connected to the third connecting sub-portion 313, the second blocking portion 3135 protrudes from the surface of the third connecting sub-portion 313 facing the battery cell 20, and the second blocking portion 3135 is arranged around the periphery of the discharge structure 3132; the first blocking portion 3134 and the second blocking portion 3135 are capable of blocking the adhesive or solid particles between the battery cell 20 and the third connecting sub-portion 313 from contacting the electrode terminal 23, the pressure relief mechanism 24, and the discharge structure 3132, such that the electrode terminal 23 can be stably electrically connected to the busbar component 51, and the pressure relief mechanism 24 and the discharge structure 3132 can be promptly activated, thereby effectively improving the use reliability of the battery 1100.

The arrangement of the first blocking portion 3134 can block the adhesive or solid particles from contacting the electrode terminal 23, which is conducive to improving the reliability of the electrical connection between the electrode terminal 23 and the busbar component 51, thereby improving the use reliability of the battery 1100; and the arrangement of the second blocking portion 3135 can block the adhesive or solid particles from contacting the pressure relief mechanism 24 and the discharge structure 3132, which is conducive to improving the smoothness of the discharge of the emissions, thereby improving the use reliability of the battery 1100.

In some embodiments, the first blocking portion 3134 is capable of abutting against the battery cell 20 to increase the sealing performance. The adhesive or solid particles located between the battery cell 20 and the third connecting sub-portion 313 are less likely to contact the electrode terminal 23, such that the electrical connection reliability between the electrode terminal 23 and the busbar component 51 is better, and thus the use reliability of the battery 1100 is better.

In some embodiments, the second blocking portion 3135 is capable of abutting against the battery cell 20 to increase the sealing performance. The adhesive or solid particles located between the battery cell 20 and the third connecting sub-portion 313 are less likely to contact the pressure relief mechanism 24 and the discharge structure 3132, such that the pressure relief mechanism 24 and the discharge structure 3132 are capable of discharging the emissions more smoothly to improve the use reliability of the battery 1100.

In some cases, an adhesive is applied on the surface of the battery cell 20 facing the connecting member 30, and the connecting member 30 is fixedly connected to the battery cell 20 by the adhesive. However, during the bonding process, the adhesive may overflow into the gap between two adjacent battery cells 20 and solidify in the gap, and the solidified adhesive has a relatively high hardness. During the charging and discharging process of the battery cell 20, the solidified adhesive presses against the battery cell 20, and the battery cell 20 is prone to damage, which affects the use reliability of the battery cell 20. In some cases, during the production and manufacturing process of the battery 1100, some solid particles (such as metal particles) may fall on the surface of the battery cell 20 facing the insulating member 30, and the solid particles may move to the gap between two adjacent battery cells 20, such that the battery cells 20 are prone to damage, and thus the use reliability of the battery cells 20 is affected.

In some embodiments, a first gap 201 is formed between two adjacent battery cells 20 arranged in the third direction Y; the first connecting sub-portion 311 is provided with a third blocking portion 3111, the third blocking portion 3111 protrudes from the surface of the first connecting sub-portion 311 facing the battery cell 20, and the third blocking portion 3111 is configured to block an adhesive or solid particles from entering the first gap 201; and/or, a second gap 202 is formed between two adjacent battery cells 20 arranged in the second direction X; the second connecting sub-portion 312 is provided with a fourth blocking portion 3121, the fourth blocking portion 3121 protrudes from the surface of the second connecting sub-portion 312 facing the battery cell 20, and the fourth blocking portion 3121 is configured to block an adhesive or solid particles from entering the second gap 202.

Two adjacent battery cells 20 arranged in the third direction Y are spaced apart from each other, and the gap formed between the two adjacent battery cells 20 is the first gap 201. The third blocking portion 3111 may refer to a protruding structure disposed on the surface of the first connecting sub-portion 311 facing the battery cell 20, and the third blocking portion 3111 and the first connecting sub-portion 311 may be an integrally formed structure. The third blocking portion 3111 may also be a separate component, and the third blocking portion 3111 is fixed on the first connecting sub-portion 311 by screwing, snap-fit connection, bonding, or other manners. For example, the third blocking portion 3111 may be a sealing strip, or the like.

In some embodiments, the third blocking portion 3111 extends in the second direction X; in the second direction X, the third blocking portion 3111 may extend from one end to the other end of the first connecting sub-portion 311, such that the third blocking portion 3111 is capable of blocking the adhesive or solid particles from entering all the first gaps 201 between two adjacent groups of the plurality of battery cells 20 arranged in the second direction X; the third blocking portion 3111 may also be disposed on a partial section of the first connecting sub-portion 311, such that the third blocking portion 3111 is capable of blocking the adhesive or solid particles from entering part of the first gaps 201 between two adjacent groups of the plurality of battery cells 20 arranged in the second direction X.

In some embodiments, the third blocking portion 3111 may cover the first gap 201 to block the adhesive or solid particles from entering the first gap 201.

In some embodiments, the third blocking portion 3111 includes two first blocking sub-portions 3112 spaced apart from each other, and the two first blocking sub-portions 3112 are respectively disposed opposite to two adjacent battery cells 20 arranged in the third direction Y to block the adhesive or solid particles from entering the first gap 201.

Two adjacent battery cells 20 arranged in the second direction X are spaced apart from each other, and the gap formed between the two adjacent battery cells 20 is the second gap 202. The fourth blocking portion 3121 may refer to a protruding structure disposed on the surface of the second connecting sub-portion 312 facing the battery cell 20, and the fourth blocking portion 3121 and the second connecting sub-portion 312 may be an integrally formed structure. The fourth blocking portion 3121 may also be a separate component, and the fourth blocking portion 3121 is fixed on the second connecting sub-portion 312 by screwing, snap-fit connection, bonding, or other manners. For example, the fourth blocking portion 3121 may be a sealing strip, or the like.

In some embodiments, the fourth blocking portion 3121 extends in the third direction Y; in the third direction Y, the fourth blocking portion 3121 may extend from one end to the other end of the second connecting sub-portion 312, such that the fourth blocking portion 3121 is capable of blocking the adhesive or solid particles from entering all the first gaps 201 between two adjacent groups of the plurality of battery cells 20 arranged in the third direction Y; the fourth blocking portion 3121 may also be disposed on a partial section of the second connecting sub-portion 312, such that the fourth blocking portion 3121 is capable of blocking the adhesive or solid particles from entering part of the first gaps 201 between two adjacent groups of the plurality of battery cells 20 arranged in the third direction Y.

In some embodiments, the fourth blocking portion 3121 may cover the second gap 202 to block the adhesive or solid particles from entering the second gap 202.

In some embodiments, the fourth blocking portion 3121 includes two second blocking sub-portions 3122 spaced apart from each other, and the two second blocking sub-portions 3122 are respectively disposed opposite to two adjacent battery cells 20 arranged in the second direction X to block the adhesive or solid particles from entering the second gap 202.

In a possible embodiment, the first gap 201 is formed between two adjacent battery cells 20 arranged in the third direction Y; the first connecting sub-portion 311 is provided with the third blocking portion 3111, the third blocking portion 3111 protrudes from the surface of the third connecting sub-portion 313 facing the battery cell 20, and the third blocking portion 3111 is configured to block the adhesive or solid particles located between the third connecting sub-portion 313 and the battery cell 20 from entering the first gap 201; the third blocking portion 3111 is capable of blocking the adhesive or solid particles from entering the first gap 201, thereby reducing the risk of damage to the battery cell 20, which is conducive to improving the use reliability and service life of the battery 1100.

In a possible embodiment, the second gap 202 is formed between two adjacent battery cells 20 arranged in the second direction X; the second connecting sub-portion 312 is provided with the fourth blocking portion 3121, the fourth blocking portion 3121 protrudes from the surface of the second connecting sub-portion 312 facing the battery cell 20, the fourth blocking portion 3121 is configured to block the adhesive or solid particles located between the third connecting sub-portion 313 and the battery cell 20 from entering the second gap 202, and the fourth blocking portion 3121 is capable of blocking the adhesive or solid particles from entering the second gap 202, thereby reducing the risk of damage to the battery cell 20, which is conducive to improving the use reliability of the battery 1100.

In yet another possible embodiment, the first gap 201 is formed between two adjacent battery cells 20 arranged in the third direction Y; the first connecting sub-portion 311 is provided with the third blocking portion 3111, the third blocking portion 3111 protrudes from the surface of the first connecting sub-portion 311 facing the battery cell 20, and the third blocking portion 3111 is configured to block the adhesive or solid particles from entering the first gap 201; the second gap 202 is formed between two adjacent battery cells 20 arranged in the second direction X; the second connecting sub-portion 312 is provided with the fourth blocking portion 3121, the fourth blocking portion 3121 protrudes from the surface of the second connecting sub-portion 312 facing the battery cell 20, and the fourth blocking portion 3121 is configured to block the adhesive or solid particles from entering the second gap 202; the arrangement of the third blocking portion 3111 and the fourth blocking portion 3121 can reduce the risk of the adhesive or solid particles entering the first gap 201 and the second gap 202, and can effectively reduce the risk of damage to the battery cell 20, which is conducive to improving the use reliability of the battery 1100.

The arrangement of the third blocking portion 3111 and/or the fourth blocking portion 3121 can reduce the risk of the adhesive or solid particles entering the gap between two adjacent battery cells 20, and reduce the risk of damage to the battery cells 20, which is conducive to improving the use reliability of the battery 1100.

In some embodiments, the third blocking portion 3111 is capable of abutting against the battery cell 20 to increase the sealing performance. The adhesive or solid particles are less likely to enter the first gap 201, which can effectively reduce the risk of damage to the battery cell 20, and is conducive to improving the use reliability of the battery 1100.

In some embodiments, the fourth blocking portion 3121 is capable of abutting against the battery cell 20 to increase the sealing performance. The adhesive or solid particles are less likely to enter the second gap 202, which can effectively reduce the risk of damage to the battery cell 20, and is conducive to improving the use reliability of the battery 1100.

In some embodiments, the connecting member 30 is an insulating member 301, and the battery 1100 further includes a busbar component 51 configured to be electrically connected to the electrode terminal 23 of the battery cell 20; the first connecting portion 31 of the insulating member 301 is disposed between the busbar component 51 and the battery cell 20.

The insulating member 301 may refer to a component with insulating properties. The insulating member 301 may be made of an insulating material, such as epoxy resin, polycarbonate, polyvinyl chloride, or polypropylene. The insulating member 301 may also refer to a component having an insulating layer applied on the surface thereof, and the insulating layer may be, but is not limited to, a polyurethane layer, an epoxy resin layer, a silicone rubber layer, a polyacrylate layer, or a fluorocarbon layer.

The busbar component 51 may refer to a component configured to be electrically connected to the electrode terminal 23 of the battery cell 20. The busbar component 51 is electrically connected to the electrode terminal 23, such that the input and output of the electrical energy of the battery cell 20 can be achieved. The busbar component 51 can also be electrically connected to the electrode terminals 23 of different battery cells 20, so as to achieve series connection, parallel connection, or series-parallel connection among different battery cells 20. The busbar component 51 may be welded to the electrode terminal 23, or may be electrically connected to the electrode terminal 23 in other electrical connection manners. The busbar component 51 may be a conductive member such as a copper busbar or an aluminum busbar.

The first connecting portion 31 of the insulating member 301 is disposed between the busbar component 51 and the battery cell 20, such that the first connecting portion 31 and the battery cell 20 are insulated, the risk of short circuit of the battery cell 20 is reduced, and the reliability of the battery 1100 is improved. In addition, the insulating member 301 between the busbar component 51 and the battery cell 20 in the battery 1100 can also be directly used as a connecting member 30, and no additional connecting member 30 is required, which is conducive to improving the structural compactness of the battery 1100 and reducing the manufacturing cost of the battery 1100.

In some embodiments, the busbar component 51 is integrated with the insulating member 301, which is conducive to improving the integration level of the battery 1100 and improving the performance of the battery 1100.

In some embodiments, the connecting member 30 is a heat exchange member 302, and the heat exchange member 302 is configured to exchange heat with the battery cell 20.

The heat exchange member 302 may refer to a component that exchanges heat with the battery cell 20. The heat exchange member 302 may be internally provided with a heat exchange channel, through which a heat exchange medium flows, thereby achieving heat exchange with the battery cell 20. When the temperature of the heat exchange medium is higher than the temperature of the battery cell 20, the heat exchange medium heats the battery cell 20; when the temperature of the heat exchange medium is lower than the temperature of the battery cell 20, the heat exchange medium cools the battery cell 20, such that the battery cell 20 is maintained in a suitable temperature environment, thereby exhibiting favorable charging and discharging performance. The heat exchange medium may be, but is not limited to, water, air, coolant, or the like.

The heat exchange member 302 can achieve temperature control of the battery cell 20, enabling the battery 1100 to exhibit favorable charging and discharging performance. In addition, the heat exchange member 302 in the battery 1100 can also be directly used as the connecting member 30, and no additional connecting member 30 is required, which is conducive to improving the structural compactness of the battery 1100 and reducing the manufacturing cost of the battery 1100.

In some embodiments, the battery 1100 further includes the busbar component 51 configured to be electrically connected to the battery cell 20; the first connecting portion 31 of the heat exchange member 302 is disposed between the busbar component 51 and the battery cell 20; at least one of the surface of the first connecting portion 31 facing the busbar component 51 and the surface of the first connecting portion facing away from the busbar component 51 of the heat exchange member 302 is covered with an insulating layer.

The insulating layer may refer to a surface coating having insulating properties, and the insulating layer may be, but is not limited to, a polyurethane layer, an epoxy resin layer, a silicone rubber layer, a polyacrylate layer, or a fluorocarbon layer.

In a possible embodiment, the battery 1100 further includes the busbar component 51 configured to be electrically connected to the battery cell 20; the first connecting portion 31 of the heat exchange member 302 is disposed between the busbar component 51 and the battery cell 20; the surface, facing the busbar component 51, of the first connecting portion 31 of the heat exchange member 302 is covered with an insulating layer, and the insulating layer is located between the first connecting portion 31 and the busbar component 51.

The insulating layer can insulate and separate the first connecting portion 31 from the busbar component 51, such that the arrangement of one heat exchange member 302 can not only achieve heat exchange of the battery cell 20, but also achieve insulation from the busbar component 51, and further achieve connection between the battery cell 20 and the case 10, which is conducive to reducing the number of components of the battery 1100, improving the compactness of the structure, improving the performance of the battery 1100, and reducing the manufacturing cost of the battery 1100.

In another possible embodiment, the battery 1100 further includes the busbar component 51 configured to be electrically connected to the battery cell 20; the first connecting portion 31 of the heat exchange member 302 is disposed between the busbar component 51 and the battery cell 20; the surface, facing away from the busbar component 51, of the first connecting portion 31 of the heat exchange member 302 is covered with an insulating layer.

The insulating layer is located between the first connecting portion 31 and the battery cell 20, and the insulating layer can insulate and separate the first connecting portion 31 from the battery cell 20, thereby achieving insulation between the heat exchange member 302 and the battery cell 20. In this way, the arrangement of one heat exchange member 302 can not only achieve heat exchange of the battery cell 20, but also achieve insulation from the battery cell 20, and further achieve connection between the battery cell 20 and the case 10, which is conducive to reducing the number of components of the battery 1100, improving the compactness of the structure, improving the performance of the battery 1100, and reducing the manufacturing cost of the battery 1100.

In yet another possible embodiment, the battery 1100 further includes the busbar component 51 configured to be electrically connected to the battery cell 20; the first connecting portion 31 of the heat exchange member 302 is disposed between the busbar component 51 and the battery cell 20; the surface of the first connecting portion 31 facing away from the busbar component 51 and the surface of the first connecting portion facing the busbar component 51 of the heat exchange member 302 are both covered with insulating layers.

Double-layer insulation can be formed between the heat exchange member 302 and the busbar component 51 and between the heat exchange member 302 and the battery cell 20, such that excellent insulation performance is achieved, and the risk of short circuit of the battery 1100 is low, thus achieving high use reliability of the battery 1100. In addition, the arrangement of one heat exchange member 302 can not only achieve heat exchange of the battery cell 20, but also achieve insulation from the battery cell 20 and the busbar component 51, and further achieve connection between the battery cell 20 and the case 10, which is conducive to reducing the number of components of the battery 1100, improving the compactness of the structure, improving the performance of the battery 1100, and reducing the manufacturing cost of the battery 1100.

At least one of the surface of the first connecting portion 31 facing the busbar component 51 and the surface of the first connecting portion facing away from the busbar component 51 of the heat exchange member 302 is covered with an insulating layer, such that the insulation from the battery cell 20 and/or the insulation from the busbar component 51 can be achieved, and meanwhile, the heat exchange member 302 can also achieve heat exchange of the battery cell 20 and connection between the battery cell 20 and the case 10. In this way, one heat exchange member 302 can achieve three functions, which can reduce the number of components of the battery 1100, improve the compactness of the structure, improve the performance of the battery 1100, and reduce the manufacturing cost of the battery 1100.

In some embodiments, the battery 1100 further includes a sampling assembly 52 for sampling information of the battery cell 20, and the sampling assembly 52 is connected to the connecting member 30.

The sampling assembly 52 may refer to a component configured to adopt information of the battery cell 20, and the information may refer to the current, voltage, temperature, and other information of the battery cell 20. The sampling assembly 52 may collect the information and feed it back to a control system (such as a battery management system (BMS)) of the battery 1100, and the control system controls the charging and discharging of the battery cell 20 to improve the charging and discharging performance of the battery 1100. When a plurality of battery cells 20 are provided, the sampling assembly 52 may collect information of part of the battery cells 20, or may adopt information of all of the battery cells 20. In some embodiments, the sampling assembly 52 may be directly connected to the battery cell 20 to collect information of the battery cell 20, or may be connected to the busbar component 51 to collect information of the battery cell 20.

The sampling assembly 52 is connected to the connecting member 30, such that the sampling assembly 52 is integrated with the connecting member 30, which can improve the integration level of the battery 1100, and thus improve the performance of the battery 1100.

In some embodiments, the sampling assembly, the connecting member, and the busbar component may be integrated into an integrated structure, which is conducive to simplifying the production process, improving the production efficiency of the battery, and reducing the production cost.

The embodiments of the present application are described below in conjunction with some specific embodiments.

### Embodiment 1

With reference to FIGs. 1 to 5 and 9, in this embodiment, the battery 1100 includes a case 10, a connecting member 30, and at least one battery cell 20; the at least one battery cell 20 is disposed within the case 10; the connecting member 30 includes a first connecting portion 31 and a second connecting portion 32 connected to each other, the first connecting portion 31 is fixedly connected to the at least one battery cell 20, and the second connecting portion 32 is fixedly connected to the case 10.

In this embodiment, the case 10 includes a first case 11 and a second case 12, the first case 11 is provided with an accommodating cavity 113 having an opening, the battery cell 20 is disposed within the accommodating cavity 113, and the second case 12 lids the opening of the accommodating cavity 113; at least one of the first case 11 and the second case 12 is fixedly connected to the second connecting portion 32.

In this embodiment, when the first case 11 is fixedly connected to the second connecting portion 32, the first case 11 includes a plurality of side wall portions 111 configured to be connected to the second case 12, and the plurality of side wall portions 111 are connected and define, in an enclosing manner, the accommodating cavity 113. At least one of the side wall portions 111 is fixedly connected to the second connecting portion 32. At least one of the side wall portions 111 is fixedly connected to the second connecting portion 32.

In this embodiment, two opposite sides of the first connecting portion 31 are connected to the second connecting portions 32, and the two second connecting portions 32 are fixedly connected to the two side wall portions 111 disposed opposite to each other, respectively.

In this embodiment, four side wall portions 111 are provided, two of the side wall portions 111 extend in the length direction of the battery 1100 and are spaced apart from each other in the width direction of the battery 1100, the other two side wall portions 111 extend in the width direction of the battery 1100 and are in the length direction of the battery 1100, and the four side wall portions 111 define, in an enclosing manner, a rectangular frame structure. Two second connecting portions 32 are provided, the two second connecting portions 32 are respectively disposed on two opposite sides of the first connecting portion 31 in the second direction X, and the two side wall portions 111 spaced apart from each other in the second direction X are fixedly connected to the two second connecting portions 32, respectively. In addition, in other embodiments, the second connecting portion 32 may also be fixedly connected to the side wall portion 111 in a one-to-one correspondence. The opening on one side of the rectangular frame structure is lidded with the second case 12, and the opening on the other side of the rectangular frame structure is lidded with the bottom plate 112.

The battery 1100 has a height direction, a length direction, and a width direction. The height direction of the battery 1100 may refer to the first direction Z in the figure, the width direction of the battery 1100 may refer to the second direction X in the figure, and the length direction of the battery 1100 may refer to the third direction Y in the figure. The case 10 defines the outline structure of the battery 1100, the height direction of the case 10 may be the height direction of the battery 1100, the length direction of the case 10 is the length direction of the battery 1100, and the width direction of the case 10 is the width direction of the battery 1100.

In this embodiment, the side wall portion 111 connected to the second connecting portion 32 is provided with a mounting structure 1113 for mounting the battery 1100. The mounting structure 1113 may refer to a mounting beam provided on the side wall portion 111, the mounting beam and the side wall portion 111 may be an integrally formed structure, the mounting beam is provided with a connecting hole, a connecting component passes through the connecting hole to connect to the vehicle, and the connecting component may be, but is not limited to, a screw or a bolt.

In this embodiment, the second connecting portion 32 is bonded to the side wall portion 111.

In this embodiment, an accommodating recess 1112 is formed in an end portion of the side wall portion 111 facing the second case 12, and the second connecting portion 32 is fixed within the accommodating recess 1112.

In this embodiment, in the first direction Z, the second connecting portion 32 does not protrude out from the end surface of the side wall portion 111 facing the second case 12, and the first direction Z is the direction from the first case 11 toward the second case 12.

In this embodiment, the second connecting portion 32 is supported on the wall surface of the accommodating recess 1112 facing the second case 12, and the second connecting portion 32 is also bonded to the wall surface of the accommodating recess 1112 facing the second case 12 by the adhesive 53.

In this embodiment, the connecting member 30 is provided on one side of the battery cell 20 facing the second case 12.

In this embodiment, the battery cell 20 has a first surface 21, and the first surface 21 is provided with an electrode terminal 23; the first surface 21 is connected to the first connecting portion 31.

In this embodiment, the first surface 21 is bonded to the first connecting portion 31.

In this embodiment, the battery cell 20 has a height direction, a length direction, and a width direction, the height direction of the battery cell 20 may be parallel to the first direction Z, the width direction of the battery cell 20 may be parallel to the second direction X, and the length direction of the battery cell 20 may be parallel to the third direction Y. Such an arrangement of the battery cell 20 within the case 10 can better utilize the internal space of the case 10 and facilitate the mounting of other components.

The battery cell 20 includes two first side surfaces 26 distributed in the height direction thereof, and the height of the battery cell 20 is defined between the two first side surfaces 26. The battery cell 20 further includes two second side surfaces 27 distributed in the length direction thereof, and the two second side surfaces 27 define the length of the battery cell 20. The battery cell 20 further includes two third side surfaces 28 distributed in the width direction thereof, and the two third side surfaces 28 define the width of the battery cell 20. For a flat battery cell 20, such as a prismatic battery cell, its width is smaller than its length and height, and its third side surface 28 has the largest area, so the third side surface 28 is also referred to as a large surface.

In this embodiment, the electrode terminal 23 is disposed on the first side surface 26, that is, the first side surface 26 is the first surface 21.

### Embodiment 2

This embodiment differs from Embodiment 1 in that: referring to FIG. 6, the battery 1100 further includes a fastener 40, the second connecting portion 32 is provided with a first connecting hole 321, the side wall portion 111 is provided with a second connecting hole 1111, and the fastener 40 passes through the first connecting hole 321 and the second connecting hole 1111 to fixedly connect the second connecting portion 32 and the side wall portion 111.

In this embodiment, in the first direction Z, the fastener 40 does not protrude out from the end surface of the side wall portion 111 facing the second case 12, and the first direction Z is the direction from the first case 11 toward the second case 12.

In this embodiment, the second connecting hole 1111 is formed in the wall surface of the accommodating recess 1112 facing the second case 12, and the fastener 40 sequentially passes through the first connecting hole 321 and the second connecting hole 1111 to fix the second connecting portion 32 on the side wall portion 111. The end portion of the fastener 40 facing the second case 12 is also accommodated in the accommodating recess 1112, and does not protrude out from the end surface of the side wall portion 111 facing the second case 12.

In this embodiment, the fastener 40 is a rivet 41, and the rivet 41 passes through the first connecting hole 321 and the second connecting hole 1111 to fixedly connect the second connecting portion 32 and the side wall portion 111.

### Embodiment 3

This embodiment differs from Embodiment 2 in that: referring to FIG. 7, the fastener 40 is a bolt 42, and the bolt 42 passes through the first connecting hole 321 and the second connecting hole 1111 to fixedly connect the second connecting portion 32 and the side wall portion 111.

### Embodiment 4

This embodiment differs from Embodiment 2 in that, referring to FIG. 8, the fastener 40 is the rivet 41, the rivet 41 passes through the first connecting hole 321 and the second connecting hole 1111, and the adhesive 53 is filled between the rivet cap of the rivet 41 and the second connecting portion 32 to improve the reliability of the fixed connection between the second connecting portion 32 and the side wall portion 111, thereby improving the structural strength of the battery 1100.

### Embodiment 5

This embodiment differs from Embodiment 1 in that: referring to FIG. 10, the battery cell 20 has a second surface 22 adjacent to the first surface 21, and the second surface 22 is connected to the first connecting portion 31.

In this embodiment, the electrode terminal 23 is disposed on the second side surface 27, the first surface 21 is the second side surface 27, and the first side surface 26 is the second surface 22.

### Embodiment 6

This embodiment differs from Embodiment 1 in that: referring to FIGs. 11 to 13, a plurality of battery cells 20 are provided, the plurality of battery cells 20 are arranged in a matrix array in the second direction X and the third direction Y, and the second direction X is perpendicular to the third direction Y; the first connecting portion 31 includes a first connecting sub-portion 311 extending in the second direction X and a second connecting sub-portion 312 extending in the third direction Y, the first connecting sub-portion 311 is fixedly connected to the plurality of battery cells 20 arranged in the second direction X, the second connecting sub-portion 312 is fixedly connected to the plurality of battery cells 20 arranged in the third direction Y, and at least one of the first connecting sub-portion 311 and the second connecting sub-portion 312 is connected to the second connecting portion 32.

In this embodiment, two first connecting sub-portions 311 are provided, seven second connecting sub-portions 312 are provided, the two first connecting sub-portions 311 and the seven second connecting sub-portions 312 form a mesh structure, both ends of the two first connecting sub-portions 311 in the second direction X are connected to the second connecting portion 32, the first connecting sub-portions 311 and the second connecting portion 32 are of an integrally formed structure, and the seven second connecting sub-portions 312 are not connected to the second connecting portion 32.

In this embodiment, the first connecting sub-portion 311 is fixedly connected to two adjacent battery cells 20 arranged in the third direction Y; the second connecting sub-portion 312 is fixedly connected to two adjacent battery cells 20 arranged in the second direction X.

In this embodiment, the connecting member 30 is an insulating member 301, and the battery 1100 further includes a busbar component 51 configured to be electrically connected to the electrode terminal 23 of the battery cell 20; the first connecting portion 31 of the insulating member 301 is disposed between the busbar component 51 and the battery cell 20.

In this embodiment, the battery 1100 further includes a sampling assembly 52 for sampling information of the battery cell 20, and the sampling assembly 52 is connected to the connecting member 30.

### Embodiment 7

This embodiment differs from Embodiment 6 in that: referring to FIGs. 14 to 17, the first connecting sub-portion 311 and the second connecting sub-portion 312 define, in an enclosing manner, an accommodating region 314; the first connecting portion 31 further includes a third connecting sub-portion 313, the third connecting sub-portion 313 connects the first connecting sub-portion 311 and the second connecting sub-portion 312, and the third connecting sub-portion 313 is disposed within the accommodating region 314.

In this embodiment, the battery cell 20 is provided with the electrode terminal 23, and the third connecting sub-portion 313 is provided with a clearance hole 3131 for providing clearance for the electrode terminal 23; a first blocking portion 3134 is connected to the third connecting sub-portion 313, the first blocking portion 3134 protrudes from the surface of the third connecting sub-portion 313 facing the battery cell 20, and the first blocking portion 3134 is arranged around the periphery of the clearance hole 3131; the battery cell 20 is provided with a pressure relief mechanism 24, the third connecting sub-portion 313 is provided with a discharge structure 3132, and the discharge structure 3132 is disposed opposite to the pressure relief mechanism 24 to release emissions discharged through the pressure relief mechanism 24; a second blocking portion 3135 is connected to the third connecting sub-portion 313, the second blocking portion 3135 protrudes from the surface of the third connecting sub-portion 313 facing the battery cell 20, and the second blocking portion 3135 is arranged around the periphery of the discharge structure 3132.

In this embodiment, a first gap 201 is formed between two adjacent battery cells 20 arranged in the third direction Y; the first connecting sub-portion 311 is provided with a third blocking portion 3111, the third blocking portion 3111 protrudes from the surface of the first connecting sub-portion 311 facing the battery cell 20, and the third blocking portion 3111 is configured to block an adhesive or solid particles from entering the first gap 201; a second gap 202 is formed between two adjacent battery cells 20 arranged in the second direction X; the second connecting sub-portion 312 is provided with a fourth blocking portion 3121, the fourth blocking portion 3121 protrudes from the surface of the second connecting sub-portion 312 facing the battery cell 20, and the fourth blocking portion 3121 is configured to block an adhesive or solid particles from entering the second gap 202.

### Embodiment 8

This embodiment differs from Embodiment 7 in that: the connecting member 30 is a heat exchange member 302, and the heat exchange member 302 is configured to exchange heat with the battery cell 20.

In this embodiment, the battery 1100 further includes a busbar component 51 configured to be electrically connected to the battery cell 20; the first connecting portion 31 of the heat exchange member 302 is disposed between the busbar component 51 and the battery cell 20; the surface of the first connecting portion 31 facing the busbar component 51 and the surface of the first connecting portion facing away from the busbar component 51 of the heat exchange member 302 are covered with insulating layers.

In some other embodiments of the present application, with reference to FIG. 1, an electric device is provided. The electric device includes the battery 1100 described in the above embodiments.

The electric device according to the embodiments of the present application employs the above battery 1100, and the battery 1100 exhibits good structural strength and rigidity, which is conducive to improving the performance of the electric device.

In some embodiments, the electric device is a vehicle 1000, and a surface of the battery cell 20 having the largest area is disposed to face a door of the vehicle 1000.

In some embodiments, the third side surface 28 of the battery cell 20, for example, as shown in FIGs. 9 and 10, is the surface having the largest area. In some embodiments, the first side surface 26 of the battery cell 20 is the surface having the largest area. In some embodiments, the second side surface 27 of the battery cell 20 is the surface having the largest area.

By adopting the technical solution of the embodiments, the surface of the battery cell 20 having the largest area is disposed to face the door of the vehicle 1000, such that when a side pillar collision or side compression occurs in the vehicle 1000, the deformation is borne by the surface having the largest area. Since the surface of the battery cell 20 having the largest area allows a much greater amount of intrusion than other surfaces of the battery cell 20, the risk of short circuit after the battery cell 20 is compressed and deformed is relatively low, which can greatly improve the safety of the battery 1100 under side pillar collision and side compression conditions.

The differences between the embodiments above are highlighted in the description of these embodiments, and reference may be made to each other for the identical or similar parts. For brevity, details are not described herein again.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a case;
at least one battery cell disposed within the case; and
a connecting member, comprising a first connecting portion and a second connecting portion connected to each other, wherein the first connecting portion is fixedly connected to the at least one battery cell, and the second connecting portion is fixedly connected to the case.

2. The battery according to claim 1, wherein the case comprises a first case and a second case, the first case is provided with an accommodating cavity having an opening, the battery cell is disposed within the accommodating cavity, and the second case lids the opening of the accommodating cavity;
at least one of the first case and the second case is fixedly connected to the second connecting portion.

3. The battery according to claim 2, wherein when the first case is fixedly connected to the second connecting portion, the first case comprises a plurality of side wall portions configured to be connected to the second case, and the plurality of side wall portions are connected and define, in an enclosing manner, the accommodating cavity, at least one of the side wall portions being fixedly connected to the second connecting portion;
at least one of the side wall portions being fixedly connected to the second connecting portion.

4. The battery according to claim 3, wherein the second connecting portion is bonded to the side wall portion.

5. The battery according to claim 3 or 4, wherein the battery further comprises a fastener, the second connecting portion is provided with a first connecting hole, the side wall portion is provided with a second connecting hole, and the fastener passes through the first connecting hole and the second connecting hole to fixedly connect the second connecting portion and the side wall portion.

6. The battery according to claim 5, wherein in a first direction, the fastener does not protrude out from an end surface of the side wall portion facing the second case, the first direction being a direction from the first case toward the second case.

7. The battery according to any one of claims 3 to 6, wherein an accommodating recess is formed in an end portion of the side wall portion facing the second case, and the second connecting portion is fixed within the accommodating recess.

8. The battery according to claim 7, wherein in the first direction, the second connecting portion does not protrude out from the end surface of the side wall portion facing the second case, the first direction being the direction from the first case toward the second case.

9. The battery according to any one of claims 3 to 8, wherein two opposite sides of the first connecting portion are connected to the second connecting portions, and the two second connecting portions are fixedly connected to the two side wall portions disposed opposite to each other, respectively.

10. The battery according to any one of claims 3 to 9, wherein the side wall portion connected to the second connecting portion is provided with a mounting structure for mounting the battery.

11. The battery according to any one of claims 2 to 10, wherein the connecting member is provided on one side of the battery cell facing the second case and/or one side of the battery cell facing away from the second case.

12. The battery according to any one of claims 1 to 11, wherein the battery cell has a first surface, and the first surface is provided with an electrode terminal;
the first surface is connected to the first connecting portion; or the battery cell has a second surface adjacent to the first surface, and the second surface is connected to the first connecting portion.

13. The battery according to claim 12, wherein when the first surface is connected to the first connecting portion, the first surface is bonded to the first connecting portion;
when the second surface is connected to the first connecting portion, the second surface is bonded to the first connecting portion.

14. The battery according to any one of claims 1 to 13, wherein a plurality of battery cells are provided, and the plurality of battery cells are arranged in a matrix array in a second direction and a third direction, the second direction being perpendicular to the third direction;
the first connecting portion comprises a first connecting sub-portion extending in the second direction and a second connecting sub-portion extending in the third direction, the first connecting sub-portion is fixedly connected to the plurality of battery cells arranged in the second direction, the second connecting sub-portion is fixedly connected to the plurality of battery cells arranged in the third direction, and at least one of the first connecting sub-portion and the second connecting sub-portion is connected to the second connecting portion.

15. The battery according to claim 14, wherein the first connecting sub-portion is fixedly connected to two adjacent battery cells arranged in the third direction; and/or,
the second connecting sub-portion is fixedly connected to two adjacent battery cells arranged in the second direction.

16. The battery according to claim 14 or 15, wherein the first connecting sub-portion and the second connecting sub-portion define, in an enclosing manner, an accommodating region; the first connecting portion further comprises a third connecting sub-portion, the third connecting sub-portion connects the first connecting sub-portion and the second connecting sub-portion, and the third connecting sub-portion is disposed within the accommodating region.

17. The battery according to claim 16, wherein the battery cell is provided with the electrode terminal, and the third connecting sub-portion is provided with a clearance hole for providing clearance for the electrode terminal; a first blocking portion is connected to the third connecting sub-portion, the first blocking portion protrudes from a surface of the third connecting sub-portion facing the battery cell, and the first blocking portion is arranged around a periphery of the clearance hole; and/or
the battery cell is provided with a pressure relief mechanism, the third connecting sub-portion is provided with a discharge structure, and the discharge structure is disposed opposite to the pressure relief mechanism to release emissions discharged through the pressure relief mechanism; a second blocking portion is connected to the third connecting sub-portion, the second blocking portion protrudes from a surface of the third connecting sub-portion facing the battery cell, and the second blocking portion is arranged around a periphery of the discharge structure.

18. The battery according to any one of claims 14 to 17, wherein a first gap is formed between two adjacent battery cells arranged in the third direction; the first connecting sub-portion is provided with a third blocking portion, the third blocking portion protrudes from a surface of the first connecting sub-portion facing the battery cell, and the third blocking portion is configured to block an adhesive or solid particles from entering the first gap; and/or
a second gap is formed between two adjacent battery cells arranged in the second direction; the second connecting sub-portion is provided with a fourth blocking portion, the fourth blocking portion protrudes from a surface of the second connecting sub-portion facing the battery cell, and the fourth blocking portion is configured to block an adhesive or solid particles from entering the second gap.

19. The battery according to any one of claims 1 to 18, wherein the connecting member is an insulating member, and the battery further comprises a busbar component configured to be electrically connected to the electrode terminal of the battery cell; the first connecting portion of the insulating member is disposed between the busbar component and the battery cell.

20. The battery according to any one of claims 1 to 19, wherein the connecting member is a heat exchange member, and the heat exchange member is configured to exchange heat with the battery cell.

21. The battery according to claim 20, wherein the battery further comprises a busbar component configured to be electrically connected to the battery cell; the first connecting portion of the heat exchange member is disposed between the busbar component and the battery cell; at least one of a surface, facing the busbar component, of the first connecting portion of the heat exchange member and a surface, facing away from the busbar component, of the first connecting portion of the heat exchange member is covered with an insulating layer.

22. The battery according to any one of claims 1 to 21, wherein the battery further comprises a sampling assembly for sampling information of the battery cell, and the sampling assembly is connected to the connecting member.

23. An electric device, comprising the battery according to any one of claims 1 to 22.

24. The electric device according to claim 23, wherein the electric device is a vehicle, and a surface of the battery cell having the largest area is disposed to face a door of the vehicle.
